# EUROPÄISCHE PATENTSCHRIFT

(11) **EP 3 529 030 B1**
(45) Veröffentlichungstag und Bekanntmachung des Hinweises auf die Patenterteilung: **07.04.2021**
(21) Anmeldenummer: 17816387.9
(22) Anmeldetag: 18.10.2017
(51) Int. Cl.: B29C 59/02, B29C 59/04, B29C 48/08, B29C 48/88

(54) **KUNSTSTOFFUMREIFUNGSBAND SOWIE VERFAHREN ZUR HERSTELLUNG VON KUNSTSTOFFUMREIFUNGSBÄNDERN**
PLASTIC STRAP AND PROCESS FOR MANUFACTURING PLASTIC STRAPS
FEUILLARD DE CERCLAGE EN PLASTIQUE ET PROCÉDÉ DE FABRICATION DE FEUILLARDS DE CERCLAGE EN PLASTIQUE

(30) Priorität: 19.10.2016 DE 102016119898
(43) Veröffentlichungstag der Anmeldung: 28.08.2019
(73) Patentinhaber: Teufelberger Gesellschaft m.b.H., 4600 Wels (AT)
(72) Erfinder: GAHLEITNER, Thomas, 4631 Krenglbach (AT); KRZIWANEK, Thomas, 4600 Wels (AT)
(74) Vertreter: Burger, Hannes
(86) Internationale Anmeldenummer: PCT/AT2017/060268
(87) Internationale Veröffentlichungsnummer: WO 2018/071936

(56) Entgegenhaltungen:
- EP-A1- 0 564 189
- EP-A2- 0 313 766
- WO-A1-01/79343
- WO-A1-2012/108209
- WO-A1-2015/042631
- US-A- 4 546 029

## Beschreibung

Die Erfindung betrifft ein Kunststoffumreifungsband sowie ein Verfahren zur Herstellung von Kunststoffumreifungsbändern.

In der Verpackungsbranche bzw. zur Sicherung und Verpackung von Gegenständen und Gütern haben Umreifungsbänder aus Kunststoff die früher hierfür gebräuchlichen Stahlbänder in vielen Bereichen ersetzt. Aufgrund des teilweise hohen Verstreckungsgrades bei derartigen Kunststoffbändern, können im Besonderen Reiß- bzw. Zugfestigkeiten erzielt werden, welche mit jenen der früher üblichen Stahlbänder vergleichbar sind. Bei sehr hohen Verstreckungsgraden und ausreichender Banddicke bzw. Grammatur von Kunststoffumreifungsbändern, können diese die Reiß- bzw. Zugfestigkeit eines Stahlbandes sogar übertreffen.

Die monoaxiale bzw. zumindest vorwiegend monoaxiale Verstreckung dieser Umfreifungsbänder aus Kunststoff, bringt hierbei die hohen Zugfestigkeiten bzw. Reißfestigkeiten der Umreifungsbänder hervor. Durch eben jene monoaxiale Verstreckung ist aber auch eine hohe Anfälligkeit dieser Kunststoffumreifungsbänder zum Aufreißen bzw. Auffasern in Längsrichtung bedingt, auch bekannt als Längsspleißen. Dies vor Allem aufgrund der vorwiegend in diese Längsrichtung bzw. in Richtung einer Längserstreckung der Umreifungsbänder orientierten Ausrichtung der Makromolekülketten des jeweiligen Kunststoffmaterials. Aufgrund dieser Vorzugsorientierung der Makromoleküle, ist im verstreckten Kunststoffmaterial quer zur Längsrichtung der Kunststoffbänder relativ wenig intermolekularer Zusammenhalt vorhanden. Die hohe Anfälligkeit zum Aufreißen oder Auffasern in Längsrichtung, insbesondere bei hochgradig verstreckten Umreifungsbändern, muss sowohl bei deren Anwendung zur Umreifung, aber auch bei allfälligen, im Herstellungsprozess nach dem Verstrecken durchgeführter Verfahrensschritte berücksichtigt werden.

Kunststoffumreifungsbänder sind üblicherweise mit makroprofilierten oder mit glatten Oberflächen erhältlich. Kunststoffumreifungsbänder mit glatter Oberfläche werden hierbei vorrangig für Verpackungen bzw. Umreifungen von Gütern verwendet, bei welchen besonders hohe Zugfestigkeiten gefordert sind, wie zum Beispiel beim Bündeln von großen Gegenständen oder bei Umreifung bzw. Umschlingen ganzer Paletten. Dies unter anderem aufgrund ihrer hohen Grammatur im Vergleich zu geprägten Bändern. Solche Umreifungen zur Bündelung bzw. Transportsicherung von Gütern werden häufig halb- oder vollautomatisch mittels Umreifungsvorrichtungen durchgeführt. Hierbei werden die zu umreifenden Gegenstände mit Umreifungsbändern umwickelt, anschließend maschinell gespannt, und schließlich die beiden Längsenden eines Umreifungsbandes miteinander verbunden. Bei Kunststoffumreifungbändern werden zur Sicherung eines gespannten Bandes die jeweiligen Band-Längsenden bevorzugt miteinander verschweißt.

Grundsätzlich kann ein Verschweißen der Längsenden hierbei durch Keil- oder Reibschweißen ausgeführt werden. Beim Heizkeilverschweißen werden die beiden Längsenden mittels eines erhitzten Heizkeils, zum Beispiel einer Metallzunge oberflächlich erwärmt, und anschließend aufeinander gepresst. Beim Reibschweißen werden mittels einer Umreifungsvorrichtung je eine Oberfläche der beiden zu verbindenden Längsenden eines Kunststoffumreifungsbandes in Kontakt gebracht, und anschließend in schneller, oszillierender Abfolge gegeneinander bewegt. Hierdurch werden die Oberflächen der Längsenden durch die entstehende Reibungswärme erhitzt, und verbinden sich materialschlüssig durch den aufgebrachten Druck.

Zur Erzielung eines guten Materialschlusses zwischen den beiden Längsenden, im Besonderen beim Reibschweißen, ist eine gute Greif- bzw. Führbarkeit der Längsenden durch die Führungselemente der Umreifungsvorrichtungen, sowie eine gute Beweglichkeit der Oberflächen der Längsenden gegeneinander, Voraussetzung. In der Verpackungsbranche ist vor allem bei maschinell ausgeführten Reibschweißvorgängen außerdem von hoher Wichtigkeit, dass ein jeweiliger individueller Verbindungsvorgang für die beiden Längsenden eines Umreifungsbandes möglichst rasch durchgeführt werden kann.

Bei Kunststoffumreifungsbändern mit glatter Oberfläche sind diese Verbindungs- bzw. Schweißvorgänge oftmals problematisch. Dies zum einen, da Führungsmittel, wie etwa Führungsbacken oder Spannräder von Umreifungsvorrichtungen bzw. -maschinen die glatten Oberflächen dieser Umreifungsbänder oft nur mangelhaft führen können. Zusätzlich zeigen glatte Oberflächen von Kunststoffbändern beim Aneinanderlegen bzw. Aneinanderpressen eine vergleichsweise gute Haftung jeweils aneinander, was ein folgendes Bewegen der Oberflächen bzw. der beiden Längsenden gegeneinander zwecks Reibverschweißung erheblich erschweren kann. Insbesondere bei Umreifungsbändern aus relativ polaren Kunststoffmaterialien, etwa Polyestern oder Polyamiden, kann es sogar zu einer Art schwacher Verklebung bzw. Klebewirkung der entsprechenden Oberflächen aneinander kommen. Dies kann Reibschweißvorgänge zur Sicherung von gespannten Umreifungsbändern unter anderem stark verzögern. In ungünstigen Fällen kann ein Schweißvorgang sogar gänzlich unmöglich sein, und/oder kann ein entsprechendes Kunststoffumreifungsband mit glatter Oberfläche bei Schweißvorgang beschädigt oder sogar zerstört werden.

Bei existierende Lösungen wird diese Problematik dadurch umgangen, dass auf die Oberfläche(n) eines glatten Kunststoffumreifungsbandes Mittel aufgebracht werden, welche der oftmals starken Haftung der glatten Oberflächen aneinander entgegenwirken. Solche Mittel können zum Beispiel durch Paraffine, Silikone bzw. durch wachsartige Substanzen gebildet sein. Solche oder andere Mittel können beispielsweise durch Tauchen der Umreifungsbändern in Emulsionsbädern, oder etwa durch Besprühen der Umreifungsbänder mit Aerosolen bzw. zerstäubten Lösungen oder Emulsionen der Mittel, auf die jeweiligen Oberfläche(n) aufgebracht werden.

Nachteilig sind hierbei allerdings die zusätzlichen Materialkosten, welche durch die entsprechenden, auf die Oberflächen der Umreifungsbänder aufgebrachten Mittel entstehen. Des Weiteren kann es insbesondere bei langen Lagerzeiten der Umreifungsbänder vorkommen, dass die aufgebrachten Mittel zumindest teilweise wieder von der oder den Oberfläche(n) migrieren bzw. entfernt werden, und somit die Funktionswirksamkeit eines Kunststoffumreifungsbandes hinsichtlich eines Verschweißvorgangs zumindest wieder stark beeinträchtigt wird

Ein anderer Lösungsansatz ist in der Druckschrift WO 2015/042631 A1 offenbart, wonach das Kunststoffumreifungsband zur Verbesserung der Haftung mittels Nadelwalzen derart geprägt wird, dass sich Ausfransungen auf der Oberfläche bilden.

Aufgabe der vorliegenden Erfindung war es, diese Nachteile des Standes der Technik zu überwinden, und ein verbessertes Verfahren zur Herstellung eines Kunststoffumreifungsbandes, sowie ein verbessertes Kunststoffumreifungsband zur Verfügung zu stellen.

Diese Aufgabe wird durch ein Verfahren zur Herstellung von Kunststoffumreifungsbändern und ein Kunststoffumreifungsband gemäß den Ansprüchen gelöst.

Das Verfahren umfasst die Bereitstellung eines teilkristallinen, thermoplastischen Kunststoffmaterials, und das Aufschmelzen des bereitgestellten Kunststoffmaterials. In einem weiteren Verfahrenschritt wird das aufgeschmolzene Kunststoffmaterial mittels einer Extrusionsvorrichtung zu wenigstens einem Kunststoffstrang extrudiert. Des Weiteren umfasst das Verfahren ein Abkühlen des extrudierten Kunststoffstranges, insbesondere mittels einer Abkühlvorrichtung, und anschließend ein monoaxiales oder überwiegend monoaxiales Verstrecken des Kunststoffstranges zu einem verstreckten Strang mittels zumindest eines Reckwerks. Dieser verstreckte Strang weist zwei durch eine Dicke des verstreckten Stranges voneinander beabstandete Oberflächen auf.

Wesentlich ist, dass zumindest eine Oberfläche des verstreckten Stranges mittels einer Oberflächenbehandlungsvorrichtung mit einer Mikrostruktur bzw. einem Mikromuster, insbesondere mit einer mit dem bloßen menschlichen Auge optisch nicht klar auflösbaren Mikrostruktur versehen wird.

Dadurch können Kunststoffumreifungsbänder mit optisch glatt erscheinender Oberfläche und hoher Grammatur hergestellt werden, welche sich im Besonderen für Umreifungsvorgänge eignen, bei welchen hohe Zugfestigkeiten des Umreifungsbandes erforderlich sind. Vorteilhaft ist hierbei, dass durch die auf- bzw. eingebrachte Mikrostruktur die hergestellten Kunststoffumreifungsbänder dennoch hervorragend mittels Umreifungsvorrichtungen maschinell bzw. teil- oder vollautomatisiert zu Umreifungen verarbeitet bzw. genutzt werden können. Im Besonderen können Spann- und Schweißvorgänge zur Sicherung der Kunststoffumreifungsbänder an den bzw. um die zu umreifenden Gütern ohne wesentliche Schwierigkeiten maschinell ausgeführt werden. Dadurch kann vorteilhafterweise in weiterer Folge auch der erforderliche Zeit- und Energieaufwand für einen jeweiligen Verschweiß- bzw. Reibschweißvorgang jeweils verringert werden.

Im Falle von Kunststoffumreifungsbändern, bei welche lediglich eine Bandoberfläche mit einer Mikrostruktur versehen ist, kann bei einem Verschweißen der beiden Längsenden jeweils die Bandoberfläche mit der Mikrostruktur mit der gegenüberliegenden, unstrukturierten bzw. glatten Bandoberfläche verschweißt werden. Bei beidseitig mikrostrukturierten Kunststoffumreifungsbändern können jeweils eine Mikrostruktur aufweisende Bandoberflächen miteinander verschweißt werden. Die Kunststoffumreifungsbänder können grundsätzlich zur umlaufenden Fixierung von Gütern bzw. Gegenständen verwendet bzw. verarbeitet werden.

Überaschenderweise hat sich herausgestellt, dass die Oberflächenbehandlung zum Versehen der Kunststoffumreifungsbänder mit einer Mikrostruktur bzw. einem Mikromuster durchgeführt werden kann, ohne dass die Kunststoffumreifungsbänder während oder nach der Herstellung hierdurch geschädigt werden. Im Besonderen zeigen der verstreckte Kunststoffstrang während, bzw. die Kunststoffumreifungsbänder nach der Oberflächenbehandlung keine signifikant erhöhte Tendenz hinsichtlich einer Auftrennung bzw. eines Aufreißens oder Auffaserns in Längsrichtung bzw. in Richtung der Längserstreckung. Des Weiteren können die mechanischen Eigenschaften der Kunststoffumreifungsbänder, insbesondere die durch das Verstrecken erzielten, hohen Zugfestigkeiten erhalten werden. Die Mikrostruktur kann wenigstens auf Teilabschnitte bzw. Teilbereiche der zumindest einen Oberfläche des verstreckten Kunststoffstranges aufgebracht werden.

Als thermoplastisches Kunststoffmaterial können im Prinzip alle verstreck- bzw. reckbaren, teilkristallinen Kunststoffmaterialien oder Mischungen bzw. Blends dieser Kunststoffmaterialien bereitgestellt werden. Ein thermoplastisches Kunststoffmaterial im Sinne dieser Beschreibung ist ein schmelzbarer bzw. schweißbarer, polymerer organischer Festkörper, welcher synthetisch oder halbsynthetisch aus monomeren, organischen Molekülen und/oder Biopolymeren hergestellt werden kann. Ein teilkristallines, thermoplastisches Kunststoffmaterial kann beispielsweise aus der Gruppe der Polyolefine, Polyester oder Polyamide, oder Mischungen dieser Polymere ausgewählt werden. Im Speziellen kann ein Kunststoffmaterial aus der Gruppe der Polyolefine oder Polyester, oder Mischungen hiervon bereitgestellt werden. Dem bereitgestellten Kunststoffmaterial können außerdem noch Füllstoffe bzw. Additive beigemengt werden.

Das bereitgestellte Kunststoffmaterial kann zum Beispiel in einer Plastifiziereinheit einer Extrusionsvorrichtung, beispielsweise einem Schneckenextruder aufgeschmolzen werden, wie dies für eine anschließende Formgebung bei thermoplastischen Kunststoffmaterialien üblich ist. Anschließend kann das aufgeschmolzenen Kunststoffmaterial via ein formgebendes Extrusionswerkzeug, aufweisend beispielsweise eine Düse oder mehrere Düsen, zu einem Kunststoffstrang extrudiert werden. Zur Herstellung eines rohgeformten Kunststoffstranges, welcher weiter zu einem Kunststoffumreifungsband verarbeitet wird, kann eine Düse insbesondere schlitzförmig ausgestaltet sein. Der folgende Abkühlschritt kann grundsätzlich passiv durch Führen des extrudierten Kunststoffstranges über eine bestimmte Abkühlstrecke an der Umgebungsluft durchgeführt werden. Vorzugsweise wird der extrudierte Kunststoffstrang zur aktiven Abkühlung durch eine Abkühlvorrichtung, etwa ein temperiertes Wasserbad geführt. Durch das Abkühlen kann eine Rohform des extrudierten Kunststoffstranges konserviert werden.

Der anschließende Verstreckungsvorgang kann in einem an sich bekannten Reckwerk durch Abziehen und Dehnen des abgekühlten Kunststoffstranges durchgeführt werden. Hierbei wird der abgekühlte Kunststoffstrang monoaxial oder vorwiegend monoaxial in einer Hauptverstreckungsrichtung entlang des Reckwerkes zu einem verstreckten Strang bzw. verstreckten Kunststoffstrang in die Länge gezogen. Ein Verstreckungsverhältnis des verstreckten Stranges entlang der Hauptverstreckungsrichtung nach dem Verstrecken kann beispielsweise zwischen 2 und 20 betragen. Bevorzugt beträgt das Verstreckungsverhältnis des verstreckten Stranges zwischen 3 und 15, insbesondere zwischen 4 und 12. Nach dem Verstrecken kann der verstreckte Strang bandförmig oder folienförmig ausgestaltet sein.

Die Oberflächenbehandlungsvorrichtung kann beispielsweise durch eine Laserbehandlungsvorrichtung gebildet sein, mittels welcher die zumindest eine Oberfläche des verstreckten Stranges mit der Mikrostruktur bzw. dem Mikromuster versehen werden kann. Alternativ ist zum Versehen der zumindest einen Oberfläche des verstreckten Kunststoffstranges mit einer Mikrostruktur aber auch eine Oberflächenbehandlungsvorrichtung in Art einer Sandstrahlvorrichtung zur Bearbeitung der zumindest einen Oberfläche des verstreckten Kunststoffstranges mit Feststoffpartikeln denkbar. Zum Auf bzw. Einbringen der Mikrostruktur können die verwendeten Feststoffpartikel hierbei eine Partikelgröße im ein- und/oder zweistelligen Mikrometerbereich aufweisen. Ebenso sind chemische Verfahren denkbar, beispielsweise ein An-Ätzen der Oberfläche(n) des verstreckten Kunststoffstranges. Vorzugsweise wird die Mikrostruktur mittels einer mechanischen Oberflächenbehandlungsvorrichtung auf bzw. in die zumindest eine Oberfläche des verstreckten Kunststoffstranges auf- bzw. eingebracht, wie dies noch erläutert wird.

Die auf diese Weise auf wenigstens eine Bandoberfläche des Kunststoffumreifungsbandes, aufgebrachte Mikrostruktur kann einzelne Strukturelemente wie Erhebungen und Vertiefungen umfassen, deren Ausdehnung bzw. Dimension im ein- und/oder zweistelligen Mikrometerbereich liegen. Im Besonderen kann eine Mikrostruktur auf der zumindest einen Bandoberfläche eines Kunststoffumreifungsbandes mit dem bloßen menschlichen Auge, beispielsweise aus einer Entfernung von 1 Meter optisch nicht auflösbar sein. Das heißt, dass die Mikrostruktur für das menschliche Auge aus 1 Meter Betrachtungsdistanz als Struktur nicht erkennbar sein kann. Dies bedeutet nicht, dass eine Veränderung der Oberfläche nach der Oberflächenbehandlung, beispielsweise im Vergleich zur Oberfläche des verstreckten Kunststoffstranges vor der Oberflächenbehandlung, für das menschliche Auge generell nicht erkennbar wäre. Durch die Mikrostruktur kann eine oberflächenbehandelte Oberfläche insbesondere matter, also mattiert im Vergleich zu einer nicht oberflächenbehandelten, glatten Oberfläche desselben Kunststoffmaterials erscheinen.

Bei einer Weiterbildung des Verfahrens kann vorgesehen sein, dass als Kunststoffmaterial ein Polyester, insbesondere Polyethylenterephthalat bereitgestellt wird.

Durch Bereitstellen eines Polyesters können Umreifungsbänder mit hervorragenden, mechanischen Eigenschaften, insbesondere mit besonders hohen Zugfestigkeiten hergestellt werden. Polyestermaterialien zeigen nach dem Verstrecken außerdem eine verhältnismäßig geringe Neigung zur Auftrennung bzw. Auffaserung in Längsrichtung bzw. in Richtung der Längserstreckung eines jeweiligen Kunststoffumreifungsbandes. Ein Polyester kann zum Beispiel durch Polybutylenterephtalat (PBT) oder Polyethylennaphtalat gebildet sein. Bevorzugt wird als teilkristallines, thermoplastisches Kunststoffmaterial Polyethylenterephthalat bereitgestellt.

Des Weiteren kann vorgesehen sein, dass als Oberflächenbehandlungsvorrichtung eine Prägevorrichtung umfassend wenigstens eine Prägewalze eingesetzt wird.

Hierdurch kann eine Oberflächenbehandlungsvorrichtung bereitgestellt werden, mittels welcher die zumindest eine Oberfläche des verstreckten Kunststoffstranges besonders kontrolliert und schonend mit einer Mikrostruktur versehen werden kann. Die Mikrostruktur wird in diesem Fall mechanisch durch Direktkontakt jeweils eines Teilabschnittes einer entsprechend ausgestalteten Prägeoberfläche der wenigstens einen Prägewalze auf die zumindest eine Oberfläche des verstreckten Kunststoffstranges aufgebracht. Hierzu ist vorteilhafterweise lediglich ein geringer Anpressdruck der Prägewalze auf die zumindest eine Oberfläche des verstreckten Kunststoffstranges erforderlich. Bei Anwendung dieser Oberflächenbehandlungsmethode ist eine jeweilige Mikrostruktur auch höchst reproduzierbar. Des Weiteren kann eine Prägewalze unkompliziert und nahtlos in gesamten Produktionsprozess für Kunststoffumreifungsbänder eingefügt werden, sodass keine Kompromisse beispielsweise hinsichtlich einer Führungsgeschwindigkeit oder Abziehgeschwindigkeit für einen jeweiligen Kunststoffstrang eingegangen werden müssen. Im Falle, dass die Mikrostruktur lediglich auf eine Oberfläche des verstreckten Kunststoffstranges, kann der verstreckte Kunststoffstrang beispielsweise jeweils direktkontaktiert zwischen der Prägewalze und einer weiteren, gegenläufig rotierenden Führungswalze mit glatter bzw. nicht profilierter Walzenoberfläche hindurchgeführt werden. Alternativ kann auch eine Führungsbahn bzw. ein Führungsband mit glatter Oberfläche gegenüber der Prägewalze vorgesehen sein.

Ferner kann es zweckmäßig sein, wenn die zumindest eine Oberfläche des verstreckten Stranges mittels wenigstens einer Prägewalze, aufweisend ein Oberflächenprofil mit einer Zufallsstruktur, mit einer Mikrostruktur versehen wird.

Dadurch können die Kunststoffumreifungsbänder aufweisend eine Zufallstruktur im Mikrometerbereich auf zumindest einer Bandoberfläche, hergestellt werden. Eine Prägeoberfläche einer entsprechenden Prägewalze kann mit verhältnismäßig geringem Aufwand mit einer derartigen Zufallsstruktur versehen werden. Im Besonderen können hierbei Herstellungsmaßnahmen für eine geordnete Strukturierung mit wiederkehrenden bzw. sich wiederholenden Struktureinheiten erübrigt werden. Zum Beispiel kann eine Zufallsstruktur mittels einer Laservorrichtung, insbesondere einer Laserablationsvorrichtung, deren Laserstrahl(en) in einem eingeschränkt zufallsgenerierten Bahnmuster über die Oberfläche der entsprechenden Prägewalze geführt werden, hergestellt werden.

Gegebenenfalls sind auch andere physikalische Methoden bzw. mechanische Methoden, etwa ein Beschuss mit Partikeln im Sinne eines Sandstrahlens oder ein Abschleifen, oder auch chemische Methoden wie etwa chemische Abtragung oberflächennaher Schichten zur Herstellung einer Mikro-Zufallsstruktur auf der Prägeoberfläche einer Prägewalze möglich.

Im Prinzip kann auch vorgesehen sein, dass eine Zufalls-Mikrostruktur mittels anderer Oberflächenbehandlungsvorrichtungen auf die zumindest eine Oberfläche der verstreckten Kunststoffstranges aufgebracht bzw. eingebracht wird. Zum Beispiel können hierzu Vorrichtungen wie etwa eine zum beschränkt zufälligen Beschuss der zumindest einen Oberfläche mit mikrometergroßen Partikeln, oder eine Laservorrichtung, deren Laserstrahl(en) in einem eingeschränkt zufallsgenerierten Bahnmuster über die zumindest eine Oberfläche geführt werden, eingesetzt werden. Bei derartigen Methoden ist jedoch allenfalls ein erhöhtes Potential für eine Schädigung der Kunststoffumreifungsbänder während oder nach der Herstellung zu berücksichtigen.

Generell kann bei einer Ausführungsform des Verfahrens vorgesehen sein, dass die zumindest eine Oberfläche des verstreckten Stranges mittels wenigstens einer Prägewalze, aufweisend ein Oberflächenprofil bzw. eine Prägeoberfläche mit einer mittleren Rauheit Ra zwischen 2 µm und 15 µm, mit einer Mikrostruktur versehen wird. Die mittlere Rauheit Ra wird häufig auch als arithmetischer Mittenrauwert bezeichnet. Bevorzugt wird eine Prägewalze eingesetzt, deren Oberflächenprofil bzw. Prägeoberfläche einer mittleren Rauheit Ra zwischen 4 µm und 12 µm aufweist.

Des Weiteren kann es zweckmäßig sein, wenn die zumindest eine Oberfläche des verstreckten Stranges mittels wenigstens einer Prägewalze, aufweisend ein Oberflächenprofil bzw. eine Prägeoberfläche mit einer gemittelten Rautiefe R_{z} zwischen 10 µm und 100 µm, mit einer Mikrostruktur versehen wird. Vorzugsweise wird eine Prägewalze verwendet, deren Oberflächenprofil bzw. Prägeoberfläche eine gemittelte Rautiefe R_{z} zwischen 20 µm und 80 µm aufweist.

Außerdem kann vorgesehen sein, dass die zumindest eine Oberfläche des verstreckten Stranges mittels wenigstens einer Prägewalze, aufweisend ein Oberflächenprofil bzw. eine Prägeoberfläche mit einer mittleren Rillenbreite RSₘ zwischen 50 µm und 400 µm, mit einer Mikrostruktur versehen wird. Bevorzugt wird eine Prägewalze eingesetzt, deren Oberflächenprofil bzw. Prägeoberfläche eine mittlere Rillenbreite RSₘ zwischen 100 µm und 300 µm aufweist.

Durch die angegebenen Bereiche für Profilkenngrößen für zumindest Abschnitte der Prägeoberfläche der Prägewalze, können verstreckte Stränge bzw. Kunststoffstränge mit einer entsprechend strukturierten Präge- bzw. Mikrostruktur versehen werden. Hierbei wird das Mikroprofil der Prägeoberfläche mit den angegebenen Bereichen der Profilkenngrößen zumindest weitgehend entsprechend als Negativstruktur auf die zumindest eine Oberfläche des verstreckten Bandes übertragen. Die resultierende Rauheit und die gemittelte Rautiefe der zumindest einen Bandoberfläche des Kunststoffumreifungsbandes, hängen hierbei natürlich von einer jeweiligen Eindringtiefe der Prägeoberfläche der Prägewalze in das verstreckte Band während des Prägevorgangs ab. Durch Verwendung einer Prägewalze mit den angegebenen Bereichen für Profilkenngrößen für die Prägeoberfläche, können Kunststoffumreifungsbänder ohne großes Risiko einer Schädigung, insbesonders ohne erhebliches Risiko für eine Auftrennung bzw. Auffaserung in Richtung ihrer Längserstreckung hergestellt werden. Hierzu kann vor allem eine mittlere Rillenbreite im angegebenen Bereich, sowie eine Beschränkung der gemittelten Rautiefe R_{z} auf den angegebenen Bereich von Vorteil sein. Außerdem können Umreifungsbänder hergestellt werden, welche hervorragende mechanische Eigenschaften aufweisen, wie etwa die geforderten, hohen Zugfestigkeiten. Die angegebenen Bereiche für Profilkenngrößen der Prägeoberfläche der wenigstens einen Prägewalze, erlauben zudem das Auf- bzw. Einbringen einer Mikrostruktur auf bzw. in die zumindest eine Oberfläche des verstreckten Kunststoffstranges, welche Mikrostruktur bei Verwendung der Kunststoffumreifungsbänder bei einem Umreifungsvorgang eine sehr gute Verschweissbarkeit, insbesondere durch maschinelles Reibschweißen gewährleistet.

Die angegebenen Profilkenngrößen für Profile, sowie Methoden zur Ermittlung dieser Profilkenngrößen sind in der EN ISO 4287 definiert. Neuere Definitionen und flächenhafte bzw. flächenerfassende Messmethoden für profilierte Oberflächen sind in der Normenreihe EN ISO 25178 definiert, wobei die Messwerte wiederum in Profilkenngrößen bzw. 2D-Kenngrößen nach EN ISO 4287 transferiert bzw. gerechnet werden können.

Vorzugsweise wird die zumindest eine Oberfläche des verstreckten Stranges durchgängig, das heißt zur Gänze mit einer Mikrostruktur versehen.

Hierdurch kann im Besonderen gewährleistet werden, dass zumindest eine Bandoberfläche eines Kunststoffumreifungsbandes im Bereich der beiden Längsenden jeweils mit einer Mikrostruktur versehen ist. In weiterer Folge kann eine positive Beeinflussung der Effektivität und Qualität einer Verschweißung der beiden Längsenden miteinander durch die Mikrostruktur verbessert werden. Außerdem wirkt sich eine durchgängige Mikrostruktur positiv auf die maschinelle Führung, sowie das Spannen der Kunststoffumreifungsbänder während eines Umreifungsvorgangs aus.

Von Vorteil kann aber auch eine Verfahrensführung sein, bei welcher beide Oberflächen des verstreckten Stranges mit jeweils der bzw. jeweils mit einer Mikrostruktur versehen werden.

Auf diese Weise können Kunststoffumreifungsbänder hergestellt werden, welche im Zuge einer Umreifung bzw. eines maschinellen Umreifungsvorgangs besonders gut automatisiert führbar und verschweißbar sind.

Im Besonderen kann hierzu vorgesehen sein, dass der verstreckte Strang zwischen wenigstens zwei einander gegenüberliegenden, gegensinnig rotierenden Prägewalzen mit jeweils mikrostrukturierten Prägeoberflächen hindurchgeführt wird, und dass mittels der beiden Prägewalzen beide Oberflächen des verstreckten Stranges mit jeweils einer Mikrostruktur versehen werden.

Dadurch können beide Oberflächen des verstreckten Kunststoffstranges hocheffizient und besonders schonend mit einer Mikrostruktur versehen werden. Beschädigungen während der Herstellung und/oder während einer späteren Lagerung oder Benutzung eines Kunststoffumreifungsbandes können so außerdem hintangehalten werden.

Es kann aber auch vorteilhaft sein, wenn die zumindest eine Oberfläche des verstreckten Stranges bei einer Temperatur des verstreckten Stranges zwischen 60 °C und 120°C mit einer Mikrostruktur versehen wird.

In dem angegebenen Temperaturbereich können teilkristalline, thermoplastische Kunststoffmaterialien einerseits eine ausreichend gute Verformbarkeit zum effizienten Versehen der zumindest einen Oberfläche des verstreckten Kunststoffstranges aufweisen. Andererseits sind solche Kunststoffmaterialien im angegebenen Temperaturbereich ausreichend stabil, sodass kein signifikanter Verlust an der wenigstens vorwiegend monoaxialen Orientierung der Makromolekülketten während der mechanischen Oberflächenbehandlung hingenommen werden muss. Dadurch können Kunststoffumreifungsbänder mit sehr guten Zugfestigkeiten hergestellt werden.

In diesem Zusammenhang kann zum Beispiel vorgesehen sein, dass der verstreckte Strang mittels wenigstens einer Prägewalze und/oder mittels einer der wenigstens einen Prägewalze vorgelagerten Temperiervorrichtung temperiert wird.

Hierdurch kann eine jeweils gewünschte Soll-Temperatur des verstreckten Stranges bzw. Kunststoffstranges besonders effizient unmittelbar vor und/oder direkt während des Oberflächenbehandlungsschrittes zum Versehen der zumindest einen Oberfläche mit der Mikrostruktur vorgenommen werden. In Abhängigkeit von der Temperatur unmittelbar vor dem Oberflächenbehandlungsschritt kann der verstreckte Kunststoffstrang im Prinzip hierbei jeweils abgekühlt oder erwärmt werden. Zum Temperieren des verstreckten Kunststoffstranges kann die wenigstens eine Prägewalze beispielsweise Kanäle zur Durchführung eines temperierten, flüssigen Mediums aufweisen. Alternativ ist zum Beispiel auch ein elektrisches Beheizen der wenigstens einen Prägewalze möglich. Als vorgelagerte Temperiervorrichtung kann im Prinzip jedwede zum Erwärmen oder Abkühlen eines verstreckten Stranges geeignete Vorrichtung zum Einsatz kommen, beispielsweise ein Wasserbad oder Infrarotstrahler, etc..

Die Aufgabe der Erfindung wird aber auch durch ein Kunststoffumreifungsband mit einer Längserstreckung und normal dazu, einer Breitenerstreckung und einer Banddicke, welche Längserstreckung und Breitenerstreckung zwei durch die Banddicke voneinander distanzierte Bandoberflächen ausbilden, gelöst. Das Kunststoffumreifungsband umfasst ein teilkristallines, thermoplastisches Kunststoffmaterial, welches Kunststoffmaterial in Richtung der Längserstreckung monoaxial oder überwiegend monoaxial verstreckt ist.

Wesentlich ist, dass zumindest eine der Bandoberflächen des Kunststoffumreifungsbandes mit einer Mikrostruktur, insbesondere mit einer mit dem menschlichen Auge optisch nicht klar auflösbaren Mikrostruktur versehen ist, bzw. zumindest eine Bandoberfläche eine entsprechende Mikrostruktur aufweist.

Dadurch kann ein Kunststoffumreifungsband mit optisch glatt erscheinender Oberfläche und hoher Grammatur bzw. verhältnismäßig großem Flächengewicht bereitgestellt werden, welches sich im Besonderen für Umreifungsvorgänge eignet, bei welchen hohe Zugfestigkeiten des Umreifungsbandes erforderlich sind. Dieses Kunststoffumreifungsband eignet sich aufgrund der Mikrostruktur dennoch hervorragend zur maschinellen bzw. teil- oder vollautomatisierten Verarbeitung bzw. Nutzung zur Bildung einer Umreifung. Im Besonderen können Spann- und Schweißvorgänge zur Sicherung des Kunststoffumreifungsbandes an den bzw. um die zu umreifenden Gütern, ohne wesentliche Schwierigkeiten maschinell ausgeführt werden. Dadurch kann vorteilhafterweise auch der erforderliche Zeit- und Energieaufwand für einen jeweiligen Verschweiß- bzw. Reibschweißvorgang jeweils verringert werden.

Im Falle von Kunststoffumreifungsbändern, bei welchen lediglich eine Bandoberfläche mit einer Mikrostruktur versehen ist, kann bei einem Verschweißen der beiden Längsenden jeweils die Bandoberfläche mit der Mikrostruktur mit der gegenüberliegenden, unstrukturierten bzw. glatten Bandoberfläche verschweißt werden. Bei beidseitig mikrostrukturierten Kunststoffumreifungsbändern können jeweils eine Mikrostruktur aufweisende Bandoberflächen miteinander verschweißt werden. Das Umreifungsband kann hierbei beispielsweise zur umlaufenden Fixierung von Gütern bzw. Gegenständen verwendet bzw. verarbeitet werden. Die mechanischen Eigenschaften des Kunststoffumreifungsbandes, insbesondere die Zugfestigkeit, werden durch die Mikrostruktur nicht wesentlich beeinflusst. Auch zeigt das Kunststoffumreifungsband kein erhöhtes Risiko für ein Auftrennen bzw. Auffasern in Richtung der Längserstreckung, beispielsweise im Vergleich mit einem Umreifungsband mit denselben Dimensionen und aus demselben Kunststoffmaterial, aber ohne Mikrostruktur.

Die Mikrostruktur kann einzelne Strukturelemente wie Erhebungen und Vertiefungen umfassen, deren Ausdehnung bzw. Dimension im ein- bis zweistelligen Mikrometerbereich liegen können. Im Besonderen kann eine Mikrostruktur auf der zumindest einen Bandoberfläche des Kunststoffumreifungsbandes mit dem bloßen menschlichen Auge, beispielsweise aus einer Entfernung von 1 Meter optisch nicht auflösbar sein. Das heißt, dass die Mikrostruktur für das menschliche Auge aus 1 Meter Betrachtungsdistanz als Struktur nicht erkennbar sein kann. Dies bedeutet nicht, dass die zumindest eine mikrostrukturierte Bandoberfläche eines erfindungsgemäßen Kunststoffumreifungsbandes von einer Oberfläche eines glatten Umreifungsbandes ohne Mikrostruktur nicht zu unterscheiden wäre. Durch die Mikrostruktur kann die zumindest eine Bandoberfläche insbesondere matter, also mattiert im Vergleich zu einer glatten Oberfläche desselben Kunststoffmaterials ohne Mikrostruktur, erscheinen.

Im Besonderen kann das Kunststoffumreifungsband nach einer oder mehrerer der oben angegebenen Verfahren und/oder Verfahrensvarianten hergestellt sein. Überaschenderweise hat sich dabei herausgestellt, dass eine Oberflächenbehandlung zum Versehen der Unreifungsbänder mit einer Mikrostruktur bzw. einem Mikromuster durchgeführt werden kann, ohne dass die Kunststoffumreifungsbänder während oder nach der Herstellung hierdurch geschädigt werden.

Hinsichtlich der Banddicke des Kunststoffumreifungsbandes versteht es sich von selbst, dass diese Banddicke im Besonderen aufgrund der Mikroprägung, abschnittsweise bzw. bereichsweise entlang des Kunststoffumreifungsbandes zumindest geringfügig variieren kann. Eine Banddicke des Kunststoffumreifungsbandes kann beispielsweise zwischen 0,2 mm und 1,6 mm betragen. Vorzugsweise beträgt eine Banddicke zwischen 0,25 mm und 1,4 mm, insbesondere zwischen 0,3 mm und 1,3 mm.

Beispiele für verstreckbare, teilkristalline und thermoplastische Kunststoffmaterialien wurden bereits anhand der Beschreibung des Verfahrens zur Herstellung von Kunststoffumreifungsbändern angegeben, und kann an dieser Stelle eine neuerliche Erläuterung erübrigt werden. Das Kunststoffumreifungsband kann außer dem verstreckten Kunststoffmaterial auch Füllstoffe bzw. Additive aufweisen.

Im Besonderen kann vorgesehen sein, dass das Kunststoffmaterial durch einen Polyester, insbesondere durch Polyethylenterephthalat gebildet ist.

Hierdurch kann ein Kunststoffumreifungsband mit hervorragenden, mechanischen Eigenschaften, insbesondere mit besonders hoher Zugfestigkeit bereitgestellt werden. Des Weiteren zeigt ein Umreifungsband aus solchem Kunststoffmaterial eine verhältnismäßig geringe Neigung zur Auftrennung bzw. Auffaserung in Richtung der Längserstreckung.

Bei einer Weiterbildung kann vorgesehen sein, dass die Mikrostruktur durch eine Mikroprägestruktur gebildet ist.

Hierdurch kann ein Kunststoffumreifungsband bereitgestellt werden, welches in besonders schonender Art und Weise auf zumindest einer Bandoberfläche mit einer Mikrostruktur versehen wurde. Dies wirkt sich wiederum vorteilhaft auf die mechanischen Eigenschaften des Kunststoffumreifungsbandes aus.

Außerdem kann es vorteilhaft sein, wenn die Mikrostruktur durch eine Zufallsstruktur gebildet ist.

Dadurch kann ein Kunststoffumreifungsband, aufweisend eine Zufallstruktur im Mikrometerbereich auf zumindest einer Bandoberfläche, bereitgestellt werden. Eine derartige Mikro-Zufallsstruktur hat sich als besonders geeignet erwiesen, um bei dem Kunststoffumreifungsband einer Auffaserung bzw. Auftrennung in Richtung der Längserstreckung entgegenzuwirken, bzw. eine solche Auftrennung hintanzuhalten.

Bei einer Ausgestaltungsform des Kunststoffumreifungsbandes kann vorgesehen sein, dass die zumindest eine Bandoberfläche des Kunststoffumreifungsbandes im Bereich der Mikrostruktur bzw. die Mikrostruktur eine mittlere Rauheit Ra zwischen 0,1 µm und 2,6 µm aufweist. Insbesondere kann die zumindest eine Bandoberfläche im Bereich der Mikrostruktur bzw. die Mikrostruktur eine mittlere Rauheit Ra zwischen 0,15 µm und 1,6 µm aufweisen.

Außerdem kann es von Vorteil sein, wenn die zumindest eine Bandoberfläche des Kunststoffumreifungsbandes im Bereich der Mikrostruktur bzw. die Mikrostruktur eine gemittelte Rautiefe R_{z} zwischen 1 µm und 15 µm aufweist. Insbesondere kann die zumindest eine Bandoberfläche im Bereich der Mikrostruktur bzw. die Mikrostruktur eine gemittelte Rautiefe R_{z} zwischen 1,5 µm und 12 µm aufweisen.

Eine Weiterbildung kann auch darin bestehen, dass die zumindest eine Bandoberfläche des Kunststoffumreifungsbandes im Bereich der Mikrostruktur bzw. die Mikrostruktur eine mittlere Rillenbreite RSₘ zwischen 50 µm und 400 µm aufweist. Insbesondere kann die zumindest eine Bandoberfläche im Bereich der Mikrostruktur bzw. die Mikrostruktur eine mittlere Rillenbreite RSₘ zwischen 100 µm und 300 µm aufweisen.

Durch die angegebenen Bereiche für Profilkenngrößen der zumindest einen Bandoberfläche im Bereich der Mikrostruktur, kann ein Kunststoffumreifungsband mit einer Mikrostruktur bereitgestellt werden, welches Kunststoffumreifungsband zur Bildung einer Umreifung eine sehr gute Verschweißbarkeit, insbesondere durch maschinelles Reibschweißen aufweist. Des Weiteren werden die mechanischen Eigenschaften, insbesondere die Zugfestigkeit des Kunststoffumreifungsbandes durch eine Mikrostruktur mit den angegebenen Bereichen für Profilkenngrößen, nicht signifikant beeinflusst. Hierzu kann beispielsweise eine Beschränkung der gemittelten Rautiefe R_{z} auf den angegebenen Bereich von Vorteil sein. Auch eine mittlere Rillenbreite aus dem angegebenen Bereich hat sich hierzu als vorteilhaft erwiesen. Außerdem zeigt das Kunststoffumreifungsband mit zumindest einer derart profilierten Bandoberfläche, im Vergleich zu einem glatten, nicht profilierten Umreifungsband mit denselben Dimensionen und bestehend aus demselben Kunststoffmaterial mit demselben Verstreckungsverhältnis, keine erhöhte Neigung zur Auftrennung in Richtung der Längserstreckung.

Die angegebenen Profilkenngrößen für Profile, sowie Methoden zur Ermittlung dieser Profilkenngrößen sind in der EN ISO 4287 definiert. Neuere Definitionen und flächenhafte bzw. flächenerfassende Messmethoden für profilierte Oberflächen sind in der Normenreihe EN ISO 25178 definiert, wobei die Messwerte wiederum in Profilkenngrößen bzw. 2D-Kenngrößen nach EN ISO 4287 transferiert bzw. gerechnet werden können. Bei verstreckten Kunststoffumreifungsbändern sollen die Profilkenngrößen anhand von entlang der Hauptverstreckungsrichtung bzw. Längserstreckung ausgerichteter Messtrecken ermittelt werden, um etwaige Messfehler durch Überlagerung von Längsstrukturen, welche aufgrund des Verstreckungsvorgangs resultieren können, ausschließen zu können.

Bei einer weiteren Ausgestaltungsform des Kunststoffumreifungsbandes kann vorgesehen sein, die zumindest eine Bandoberfläche des Kunststoffumreifungsbandes durchgängig bzw. zur Gänze mit der Mikrostruktur versehen ist.

Bei einem derart ausgebildeten Kunststoffumreifungsband kann vorteilhafterweise gewährleistet werden, dass unabhängig von einer jeweils erforderlichen Länge des Kunststoffumreifungsbandes, zumindest eine Bandoberfläche des Kunststoffumreifungsbandes jeweils im Bereich der beiden Längsenden mit einer Mikrostruktur versehen ist. Außerdem wirkt sich eine durchgängige Mikrostruktur positiv auf die maschinelle Führung, sowie das Spannen der Kunststoffumreifungsbänder während eines Umreifungsvorgangs aus.

Außerdem kann es sinnvoll sein, dass beide Bandoberflächen des Kunststoffumreifungsbandes mit jeweils der bzw. jeweils mit einer Mikrostruktur versehen sind.

Auf diese Weise können Kunststoffumreifungsbänder hergestellt werden, welche im Zuge einer Umreifung bzw. eines maschinellen Umreifungsvorgangs besonders gut automatisiert verrbeitbar bzw. führbar sind. Außerdem kann die Effizienz der Verschweißung, insbesondere im Falle einer Reibverschweißung, hinsichtlich des erforderlichen Zeit- und Energieaufwands nochmalig weiter verbessert werden.

Des Weiteren kann vorgesehen sein, dass ein Verstreckungsverhältnis des Kunststoffmaterials zwischen 2 und 20 beträgt. Dies bezogen auf das Kunststoffmaterial vor dem Verstreckungsvorgang. Bevorzugt beträgt das Verstreckungsverhältnis zwischen 3 und 15, insbesondere zwischen 4 und 12.

Schließlich kann bei einer Weiterbildung des Kunststoffumreifungsbandes vorgesehen sein, dass es eine Zugfestigkeit zwischen 200 N/mm² und 600 N/mm² aufweist.

Durch die angegebenen Bereiche für die Zugfestigkeit kann ein Kunststoffumreifungsband mit jeweils ausreichender Zugfestigkeit für einen jeweiligen Anwendungszweck bzw. eine jeweilige Umreifung bereitgestellt werden. Vorzugsweise kann das Kunststoffumreifungsband eine Zugfestigkeit zwischen 250 N/mm² und 550 N/mm², insbesondere zwischen 300 N/mm² und 500 N/mm² aufweisen.

Zum besseren Verständnis der Erfindung wird diese anhand der nachfolgenden Figuren näher erläutert.

Es zeigen jeweils in stark vereinfachter, schematischer Darstellung:
- Fig. 1: Eine schematische Darstellung einer Anlage zur Herstellung eines Kunststoffumreifungsbandes, welche das Verfahren zur Herstellung veranschaulicht;
- Fig. 2: Ausschnittsweise ein Kunststoffumreifungsband, in Draufsicht auf eine mit einer Mikrostruktur versehene Bandoberfläche.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Zur Vermeidung von Wiederholungen werden in der folgenden Beschreibung einzelne Ausführungsvarianten nicht mehr explizit angeführt bzw. grafisch veranschaulicht. Es wird dazu jeweils auch auf die voranstehende Beschreibung verwiesen. In der gesamten Beschreibung wird der Begriff "Verstrecken" synonym zum Begriff "Recken" verwendet.

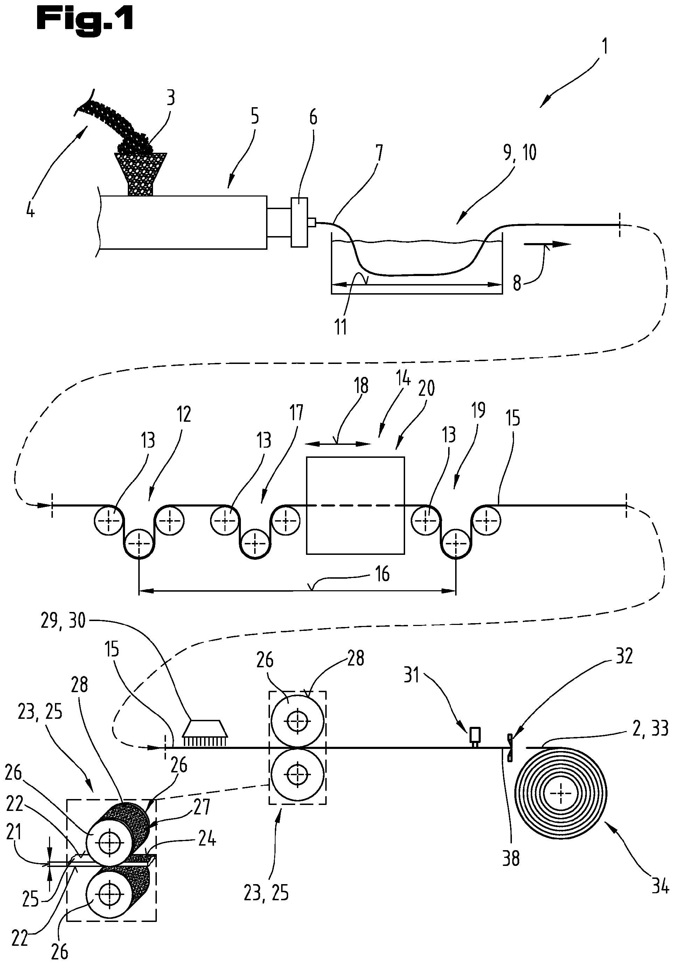

In der Fig. 1 ist eine Vorrichtung 1 zur Herstellung bzw. ein Verfahren zur Herstellung von Kunststoffumreifungsbändern 2 schematisch veranschaulicht. Zu Beginn des Verfahrens wird ein teilkristallines, thermoplastisches Kunststoffmaterial 3 bereitgestellt.

Hierbei kann im Prinzip jedwedes teilkristallines, thermoplastisches Kunststoffmaterial 3 bereitgestellt werden, welches thermoplastisch rohgeformt, verstreckt, und oberflächenbehandelt werden kann. Zum Beispiel kann vorgesehen sein, dass ein Kunststoffmaterial 3 aus der Gruppe der Polyolefine, Polyester, Polyamide, oder aus Mischungen bzw. Blends dieser polymeren Materialien bereitgestellt wird. Die letztgenannten polymeren Materialien eignen sich im besonderem Maße zur Herstellung von Umreifungsbändern, da sie einerseits sehr gut für einen Extrusionsprozess geeignet sind, und außerdem durch Verstrecken zu Kunststoffumreifungsbändern 2 mit hoher Zugfestigkeit verarbeitet werden können.

Im Speziellen kann vorgesehen sein, dass als Kunststoffmaterial 3 ein Polyester, insbesondere Polyethylenterephthalat bereitgestellt wird. Polyester eignen sich besonders zur Herstellung von Umreifungsbändern mit hervorragenden, mechanischen Eigenschaften, wie etwa hohen Zugfestigkeiten und hoher Steifheit. Dies wirkt sich wiederum positiv auf die Durchführung von Umreifungen, insbesondere auf ein maschinell ausgeführtes Umreifen bzw. Umschlingen und Spannen während eines Umreifungsvorgangs aus.

Wie in der Fig. 1 schematisch dargestellt ist, kann das teilkristalline, thermoplastische Kunststoffmaterial über eine Zuführ- bzw. Dosiervorrichtung 4 einer Extrusionsvorrichtung 5 zugeführt bzw. zudosiert werden. Hierbei können dem Kunststoffmaterial 3 auch Füllstoffe und Additive, beispielsweise Farbstoffe, Antioxidantien, und/oder andere Hilfsstoffe beigemengt werden. In der Extrusionsvorrichtung 5, zum Beispiel einem Schneckenextruder, wird das thermoplastische Kunststoffmaterial 3 sodann aufgeschmolzen, und via ein an der Extrusionsvorrichtung 5 angeordnetes bzw. befestigtes Extrusionswerkzeug 6 extrudiert.

Hierzu kann zum Beispiel vorgesehen sein, dass das Extrusionswerkzeug 6 eine oder mehrere Düse(n), insbesondere Düsen mit einem schlitzförmigen Querschnitt aufweist, durch welche Schlitzdüse(n) das geschmolzene Kunststoffmaterial gepresst bzw. zu einem bandförmigen Kunststoffstrang 7 oder zu mehreren, bandförmigen Kunststoffsträngen 7 extrudiert wird. Werden mehrere, band- bzw. streifenförmige Kunststoffstränge 7 extrudiert, können diese die nachfolgenden Verfahrensschritte gemeinsam durchlaufen. Alternativ kann auch vorgesehen, dass das Extrusionswerkzeug 6 eine Düse bzw. Schlitzdüse mit ausgedehnter Querschnittsbreite, also eine sogenannte Breitschlitzdüse umfasst, sodass ein folienförmiger Kunststoffstrang 7 mit großer Breitenerstreckung extrudiert wird. Ein derartiger, folienförmiger Kunststoffstrang 7 kann nach Durchführung weiterer Verfahrensschritte in einem Konvektionierungsschritt, jeweils entlang der Längsausrichtung des Kunststoffstranges 7 in streifen- bzw. bandförmige Stränge bzw. Bänder vereinzelt werden, um Umreifungsbänder mit geeigneten Dimensionen bzw. Breitenerstreckungen herzustellen. Jedenfalls wird durch Extrusion mittels der Extrusionsvorrichtung 5 wenigstens ein extrudierter Kunststoffstrang 7 erzeugt, dessen Rohform bzw. Roh-Querschnittsgeometrie via der bzw. den Düse(n) an dem Extrusionswerkzeug 6 in Grundzügen festlegbar ist.

Wie weiters in der Fig. 1 dargestellt ist, kann nach der Extrusion eine Abkühlung des extrudierten Kunststoffstranges 7 durchgeführt werden. Hierdurch kann im Besonderen die Rohform bzw. Querschnittsgeometrie des extrudierten Kunststoffstranges 7 konserviert werden. Im Prinzip kann hierzu ein passives Abkühlen des extrudierten Kunststoffstranges 7 durch Umgebungsluft durchgeführt werden. Gegebenenfalls kann zum Abkühlen auch ein Luftstrom eingesetzt werden. Vorzugsweise wird der extrudierte Kunststoffstrang 7 zum effizienten Abkühlen in Führungs- bzw. Transportrichtung 8 durch eine Abkühlvorrichtung 9 geführt, wie dies in der Fig. 1 gezeigt ist. Die dargestellte Abkühlvorrichtung 9 kann etwa durch ein Wasserbad 10 gebildet sein. Die Abkühlvorrichtung 9 kann zum Beispiel Wasser mit einer bestimmten Temperatur enthalten, durch welches der extrudierte Kunststoffstrang 7 geführt wird. Eine Temperatur des Kunststoffstrang 7 nach dem Abkühlen kann etwa bei gegebener Temperatur einer Kühlflüssigkeit bzw. des Wassers der Abkühlvorrichtung 9, durch eine bestimmte Länge 11 der Abkühlvorrichtung 9 beeinflusst bzw. gesteuert werden.

Zum Abziehen bzw. Führen des Kunststoffstranges 7 in Transportrichtung 8 kann nach der Abkühlvorrichtung 9 eine Abziehvorrichtung 12 angeordnet sein. Wie in der Fig. 1 dargestellt ist, kann eine solche Abziehvorrichtung 12 mehrere, mit bestimmter Winkelgeschwindigkeit rotierende Rollenelemente 13 umfassen, welche zum Beispiel ein Galettentrio ausbilden. Im Prinzip kann hierbei auch vorgesehen sein, dass ein oder mehrere Rollenelement(e) temperierbar ausgeführt sind, sodass der Kunststoffstrang 7 für die nachfolgende Weiterverarbeitung, insbesondere den Reckvorgang erwärmt oder abgekühlt werden können. Hierzu kann ein Rollenelement 13 beispielsweise mittels Temperierungsflüssigkeiten oder elektrisch temperierbar sein. Alternativ können auch andere Mittel zum Temperieren eines Kunststoffstranges 7, wie etwa Sprinklervorrichtungen, Tauchbäder oder Infrarotstrahler zum Erwärmen oder Abkühlen des Kunststoffstranges 7 angeordnet sein.

Der Reckvorgang bzw. das Verstrecken des Kunststoffstranges 7 zu einem verstreckten Strang 15, wird wie in der Fig. 1 dargestellt mittels eines Reckwerks 14 durchgeführt. Hierzu kann entlang einer Reckstrecke 16 des Reckwerks 14 eine weitere Transport- bzw. Abziehvorrichtung 17 mit Rollenelementen 13 angeordnet sein. Alle in der Fig. 1 dargestellten Rollenelemente 13 können bei der Durchführung des Verfahrens zur jeweiligen Festlegung einer Abzieh- bzw. Verfahrgeschwindigkeit für den Kunststoffstrang 7 mit jeweils unterschiedlichen Winkelgeschwindigkeiten rotieren. Hinsichtlich der Winkelgeschwindigkeit bei der Rotation ist hierbei natürlich auch ein jeweiliger Umfang der einzelnen Rollenelemente 13 zu berücksichtigen. Zur besseren Veranschaulichung weisen alle Rollenelemente 13 in der Fig. 1 denselben Umfang auf. Dies kann bei Vorrichtungen 1 zur Herstellung von Kunststoffumreifungsbändern 2 zutreffen oder auch nicht zutreffen.

Bei dem in der Fig. 1 dargestellten Ausführungsbeispiel kann vorgesehen sein, dass die Rollenelemente 13 der Abziehvorrichtung 17 mit höherer Winkelgeschwindigkeit rotieren als jene Rollenelemente 13 der vorangehenden Abziehvorrichtung 12. Hierdurch ist eine Abziehgeschwindigkeit bzw. Transportgeschwindigkeit der weiteren Abziehvorrichtung 17 größer gewählt als die Abziehgeschwindigkeit für den Kunststoffstrang 7 der vorangehenden Abziehvorrichtung 12, und wird der Kunststoffstrang 7 entlang einer Hauptverstreckungsrichtung 18 verstreckt, bzw. in die Länge gezogen.

Des Weiteren kann am Ende des Reckwerks 14 bzw. der Reckstrecke 16 eine zusätzliche Transport- bzw. Abziehvorrichtung 19 vorgesehen sein. Bei dieser zusätzlichen Abziehvorrichtung 19 kann im Betrieb der Vorrichtung 1 eine nochmals höhere Abziehgeschwindigkeit für den Kunststoffstrang 7, als jene Abziehgeschwindigkeit der bezogen auf die Transportrichtung 8 vorher angeordneten Abziehvorrichtung 17, vorgesehen sein. Hierdurch kann der Kunststoffstrang 7 zwischen der weiteren Abziehvorrichtung 17 und der zusätzlichen Abziehvorrichtung 19 nochmals weiter in die Länge gezogen bzw. verstreckt werden. Insgesamt wird der Kunststoffstrang 7 in dem Reckwerk 14 bzw. entlang der Reckstrecke 16 monoaxial oder zumindest vorwiegend monoaxial entlang der Hauptverstreckungsrichtung 18 zu einem verstreckten Strang 15 gereckt.

Ein Verstreckungsverhältnis für das Kunststoffmaterial 3 kann bei dem verstreckten Strang 15 aus einem Bereich zwischen 2 und 20 ausgewählt sein. Dies bezogen auf den extrudierten Kunststoffstrang 7 vor dem Verstreckungsvorgang. Im Zuge des Verstreckungsvorgangs wird also auch eine Dicke des Kunststoffstranges 7 durch das Verstrecken verringert. Bevorzugt wird ein Verstreckungsverhältnis für das Kunststoffmaterial 3 ausgewählt aus einem Bereich zwischen 3 und 15, insbesondere zwischen 4 und 12. Wie aus der Fig. 1 ersichtlich ist, kann das Verstrecken vorwiegend entlang der Hauptverstreckungsrichtung 18 ausgeführt werden. Geringfügige Verstreckungen bzw. Reckungen quer zur Hauptverstreckungsrichtung 18 können hierbei jedoch nicht gänzlich ausgeschlossen werden, weswegen ein verstreckter Strang 15 vorwiegend monoaxial vertreckt sein kann.

Das in der Fig. 1 dargestellte Ausführungsbeispiel für ein Reckwerk 14 dient nur zur schematischen Veranschaulichung, und können solche Reckwerke 14 natürlich noch weitere Elemente und Vorrichtung zur Duchführung bzw. Beeinflußung und Steuerung des Verstreckvorganges aufweisen. Zum Beispiel kann zur besseren Durchführung einer Reckung bzw. eines Verstreckungsvorgangs vorgesehen sein, dass entlang der Reckstrecke 16 oder mehrere Aufwärmvorrichtungen 20 vorgesehen sind. Durch solche Aufwärmvorrichtungen 20 kann ein Kunststoffstrang 7 auf eine für den Verstreckungsvorgang jeweils günstige Verarbeitungstemperatur gebracht werden, wobei eine vorteilhafte Verarbeitungstemperatur unter anderem von dem jeweils eingesetzten bzw. bereitgestellten Kunststoffmaterial 3 abhängt.

Nach dem Verstrecken liegt ein verstreckter Strang 15 vor, welcher aufgrund der nunmehr in das Kunststoffmaterial eingebrachten Vorzugs-Orientierung der Makromoleküle in der Hauptverstreckungsrichtung 18, ein erhöhtes Risiko für sogenanntes Aufspleissen, also eine Auftrennung bzw. Auffaserung entlang der Hauptverstreckungsrichtung 18 aufweist. Der verstreckte Strang 15 weist zwei durch eine Dicke 21 des verstreckten Stranges 15 voneinander beabstandete Oberflächen 22 auf.

Zumindest eine dieser Oberflächen 22 des verstreckten Stranges 15 wird im Anschluss an das Verstrecken mittels einer Oberflächenbehandlungsvorrichtung 23 mit einer Mikrostruktur 24 versehen, wie dies auch aus der Fig. 1 ersichtlich ist. Im Besonderen kann vorgesehen sein, dass die Mikrostruktur 24 mit dem bloßen menschlichen Auge optisch nicht auflösbar ist, das heißt, dass mit dem bloßen menschlichen Auge die einzelnen Strukturelemente der Mikrostruktur als solche nicht klar erkennbar sind.

Eine Oberflächenbehandlungsvorrichtung 23 kann beispielsweise durch eine Laserbehandlungsvorrichtung gebildet sein, mittels welcher die Mikrostruktur 24 bzw. das Mikromuster in die zumindest eine Oberfläche 22 des verstreckten Stranges 15 eingebracht werden kann. Dies kann beispielsweise durch teilweise bzw. abschnittsweise Ablation im Mikrometerbereich, oder auch durch abschnittsweises Schmelzen der zumindest einen Oberfläche 22 im Mikrometerbereich erfolgen. Alternativ ist zum Versehen der zumindest einen Oberfläche 22 des verstreckten Stranges 15 mit einer Mikrostruktur 24 aber auch eine Oberflächenbehandlungsvorrichtung 23 in Art einer Sandstrahlvorrichtung zur Bearbeitung der zumindest einen Oberfläche 22 des verstreckten Kunststoffstranges 15 mit Feststoffpartikeln denkbar. Zum Auf bzw. Einbringen der Mikrostruktur 24 können die verwendeten Feststoffpartikel hierbei eine Partikelgröße im ein- und/oder zweistelligen Mikrometerbereich aufweisen. Ebenso sind chemische Verfahren zum Versehen der zumindest einen Oberfläche 22 mit der Mikrostruktur 24 denkbar, beispielsweise ein An-Ätzen Oberfläche(n) 22 des verstreckten Kunststoffstranges 15.

Vorzugsweise wird zum Versehen der zumindest einen Oberfläche 22 mit der Mikrostruktur 24 eine als Prägevorrichtung 25 ausgestaltete Oberflächenbehandlungsvorrichtung 23 eingesetzt. Eine solche Prägevorrichtung 25 kann wenigstens eine Prägewalze 26 umfassen, welche Prägewalze 26 mit dem verstreckten Strang 15 in Kontakt gebracht wird, wie dies in der Fig. 1 dargestellt ist. Auf diese Weise kann ein mikrostrukturiertes Oberflächenprofil 27 von einer Prägeoberfläche 28 der Prägewalze 26 auf die zumindest eine Oberfläche 22 des verstreckten Stranges 15 übertragen werden. Hierbei wird die Mikrostruktur 24 als NegativStruktur des mikrostrukturierten Oberflächenprofils 27 der Prägeoberfläche 28 in die zumindest eine Oberfläche 22 des verstreckten Stranges 15 eingebracht. Es versteht sich von selbst, dass geringfügige Abweichungen der im Wesentlichen als Negativ des Oberflächenprofils 27 ausgeformten Mikrostruktur 24 von dem tatsächlichen Oberflächenprofil 27 der Prägeoberfläche 28 der Prägewalze 26 möglich sind. Zum Versehen mit der Mikrostruktur 24 ist vorteilhafterweise lediglich ein geringer Anpressdruck der Prägewalze 26 auf die zumindest eine Oberfläche 22 des verstreckten Stranges 15 erforderlich.

Die mikrostrukturierte Prägeoberfläche 28 der Prägewalze 26, bzw. das Oberflächenprofil 27 kann zum Beispiel mittels einer Laserablationsvorrichtung hergestellt werden. Gegebenenfalls sind auch andere physikalische Methoden, oder auch mechanische Methoden, etwa Schleifprozesse und Dergleichen, oder auch chemische Methoden wie etwa chemische Abtragung oberflächennaher Schichten zur Herstellung des Oberflächenprofils 27 auf der Prägeoberfläche 28 einer Prägewalze 26 möglich.

Grundsätzlich kann vorgesehen sein, dass eine Prägewalze 26 aufweisend eine Prägeoberfläche 28 mit einem strukturell wohldefinierten bzw. geordneten Oberflächenprofil 27, also mit einem Oberflächenprofil 27 mit wiederkehrenden, strukturellen Elementen, eingesetzt wird. Zur Herstellung derartiger Oberflächenprofile 27 sind zum Beispiel Laserablationsvorrichtungen mit entsprechender, für die Erzeugung des strukturell geordneten Oberflächenprofils 27 geeigneten Bahnsteuerung von einem oder mehreren Laserstrahl(en) geeignet.

Es kann aber auch zweckmäßig sein, wenn die zumindest eine Oberfläche 22 des verstreckten Stranges 15 mittels wenigstens einer Prägewalze 26, aufweisend ein Oberflächenprofil 27 mit einer Zufallsstruktur, mit der Mikrostruktur 24 versehen wird. Zur Herstellung derartiger Oberflächenprofile 27 können Maßnahmen für eine geordnete Strukturierung mit wiederkehrenden bzw. sich wiederholenden Struktureinheiten erübrigt werden. Zum Beispiel kann eine Zufallsstruktur mittels einer Laservorrichtung, insbesondere einer Laserablationsvorrichtung, deren Laserstrahl(en) in einem eingeschränkt zufallsgenerierten Bahnmuster über die Oberfläche der entsprechenden Prägewalze 26 geführt werden, hergestellt werden. Gegebenenfalls sind auch andere physikalische Methoden bzw. mechanische Methoden, etwa ein Beschuss mit Partikeln im Sinne eines Sandstrahlens oder ein Abschleifen, oder auch chemische Methoden wie etwa chemische Abtragung oberflächennaher Schichten zur Herstellung einer Mikro-Zufallsstruktur bzw. zur Erzeugung der Prägeoberfläche 28 mit zufallsstrukturierten Oberflächenprofil 27 einer Prägewalze 26 möglich.

In der Fig. 1 wurde zur Veranschaulichung der Mikrostruktur 24 und des mikrostrukturierten Oberflächenprofils 27 der Prägewalze 26, die zumindest eine Oberfläche 22 des verstreckten Stranges 15 nach der Oberflächenbehandlung, sowie die Prägeoberfläche 28 der Prägewalze 26 mit einer grafischen Füllung dargestellt. Die gewählte Füllung ist hierbei zur bloßen Veranschaulichung dargestellt, und ist diese Füllung nicht etwa als Abbildung einer tatsächlichen Mikrostruktur 24 oder eines tatsächlichen Oberflächenprofils 27 zu interpretieren. Ausführungen für tatsächliche Mikrostrukturen 24 oder Oberflächenprofile 27 sind dem Beschreibungstext zu entnehmen.

Grundsätzlich kann vorgesehen sein, dass die zumindest eine Oberfläche 22 des verstreckten Stranges 15 mittels wenigstens einer Prägewalze 26, aufweisend ein Oberflächenprofil 27 bzw. eine Prägeoberfläche 28 mit einer mittleren Rauheit Ra zwischen 2 µm und 15 µm, mit der Mikrostruktur 24 versehen wird. Die mittlere Rauheit Ra wird häufig auch als arithmetischer Mittenrauwert bezeichnet. Vorzugsweise wird eine Prägewalze 26 eingesetzt, deren ein Oberflächenprofil 27 bzw. Prägeoberfläche 28 einer mittleren Rauheit Ra zwischen 4 µm und 12 µm aufweist.

Ferner kann es von Vorteil sein, wenn die zumindest eine Oberfläche 22 des verstreckten Stranges 15 mittels wenigstens einer Prägewalze 26, aufweisend ein Oberflächenprofil 27 bzw. eine Prägeoberfläche 28 mit einer gemittelten Rautiefe R_{z} zwischen 10 µm und 100 µm, mit der Mikrostruktur 24 versehen wird. Bevorzugt wird eine Prägewalze 26 verwendet, deren Oberflächenprofil 27 bzw. Prägeoberfläche 28 eine gemittelte Rautiefe Rz zwischen 20 µm und 80 µm aufweist.

Weiters kann es zweckmäßig sein, dass die zumindest eine Oberfläche 22 des verstreckten Stranges 15 mittels wenigstens einer Prägewalze 26, aufweisend ein Oberflächenprofil 27 bzw. eine Prägeoberfläche 28 mit einer mittleren Rillenbreite RSₘ zwischen 50 µm und 400 µm, mit der Mikrostruktur 24 versehen wird. Vorzugsweise wird eine Prägewalze 26 eingesetzt, deren Oberflächenprofil 27 bzw. Prägeoberfläche 28 eine mittlere Rillenbreite RSₘ zwischen 100 µm und 300 µm aufweist.

Durch die angegebenen Bereiche für Profilkenngrößen für zumindest Abschnitte der Prägeoberfläche 28 der Prägewalze 26, können verstreckte Stränge 15 mit einer entsprechend strukturierten Präge- bzw. Mikrostruktur 24 versehen werden. Im Zuge des Prägevorgangs wird das Mikro-Oberflächenprofil 27 der Prägeoberfläche 28 mit den angegebenen Bereichen der Profilkenngrößen zumindest weitgehend entsprechend als Negativstruktur auf die zumindest eine Oberfläche 22 des verstreckten Bandes 15 übertragen, wie dies in der Fig. 1 veranschaulicht ist. Eine resultierende Rauheit und eine resultierende, gemittelte Rautiefe an dem herzustellenden Kunststoffumreifungsband, hängen hierbei natürlich von einer jeweiligen Eindringtiefe der Prägeoberfläche 28 der Prägewalze 26 in das verstreckte Band 15 während des Prägevorgangs ab, bzw. können durch eine jeweilige Eindringtiefe variiert werden.

Die angegebenen Profilkenngrößen für Profile, sowie Methoden zur Ermittlung dieser Profilkenngrößen sind in der EN ISO 4287 definiert. Neuere Definitionen und flächenhafte bzw. flächenerfassende Messmethoden für profilierte Oberflächen sind in der Normenreihe EN ISO 25178 definiert, wobei die Messwerte wiederum in Profilkenngrößen bzw. 2D-Kenngrößen nach EN ISO 4287 transferiert bzw. gerechnet werden können.

Im Prinzip kann vorgesehen sein, dass die Prägeoberfläche 28 der Prägewalze 26 lediglich abschnittsweise ein mikrostrukturiertes Oberflächenprofil 27 aufweist, wodurch im Verfahren lediglich Teilabschnitte der zumindest einen Oberfläche des verstreckten Stranges 15 mit der Mikrostruktur 24 versehen werden.

Bevorzugt wird die zumindest eine Oberfläche 22 des verstreckten Stranges 15 durchgängig mit der Mikrostruktur 24 versehen, wie dies auch in der Fig. 1 dargestellt ist. Hierdurch kann unter anderem gewährleistet werden, dass zumindest eine Bandoberfläche eines Kunststoffumreifungsbandes 2 im Bereich der beiden Längsenden mit jeweils der bzw. jeweils mit einer Mikrostruktur 24 versehen ist. Dadurch können Kunststoffumreifungsbänder 2 hergestellt werden, bei welchen unabhängig von einer jeweiligen zur Umreifung bzw. zum Umschlingen von Gütern erforderlichen Längserstreckung, jeweils eine Mikrostruktur 24 auf zumindest einer Bandoberfläche im Bereich zum verbesserten Verschweißen bereitgestellt ist.

In Fällen, bei welchen lediglich eine Oberfläche 22 des verstreckten Stranges 15 mit der Mikrostruktur 24 versehen wird, kann der verstreckte Strang 15 beispielsweise jeweils direktkontaktiert zwischen der Prägewalze 26 und einer weiteren, gegenläufig rotierenden Führungswalze mit glatter bzw. nicht profilierter Walzenoberfläche hindurchgeführt werden. Alternativ kann zum Beispiel auch eine Führungsbahn mit glatter Oberfläche gegenüber der Prägewalze vorgesehen sein.

Es kann aber auch von Vorteil sein, wenn beide Oberflächen 22 des verstreckten Stranges 15 mit jeweils der bzw. jeweils mit einer Mikrostruktur 24 versehen werden.

Wie in der Fig. 1 dargestellt ist, kann der verstreckte Strang 15 hierzu zwischen wenigstens zwei einander gegenüberliegenden, gegensinnig rotierenden Prägewalzen 26 hindurchgeführt wird, und mittels der beiden Prägewalzen 26 beide Oberflächen 22 des verstreckten Stranges 15 mit jeweils der Mikrostruktur 24 versehen werden.

Auf diese Weise können Kunststoffumreifungsbänder 2 hergestellt werden, welche im Zuge einer Umreifung bzw. eines maschinellen Umreifungsvorgangs besonders gut automatisiert führbar und verschweißbar sind. Alternativ zu der beidseitigen Bearbeitung eines verstreckten Stranges 15 mit jeweils einer Prägewalze 26, können natürlich die beiden Oberflächen 22 eines verstreckten Stranges 15 auch wiederum mit anderen Oberflächenbehandlungsvorrichtungen 23, etwa durch Beschuss mit Partikeln, etc., behandelt werden. Bevorzugt wird eine Prägevorrichtung 25 mit Prägewalzen 26 zum Versehen der Oberflächen 22 eines verstreckten Bandes 15 mit der Mikrostruktur 24 eingesetzt.

Hierbei kann auch vorgesehen sein, dass wenigstens eine der in dem Ausführungsbeispiel in der Fig. 1 dargestellten Prägewalzen 26 temperierbar ausgeführt ist. Hierzu kann die wenigstens eine Prägewalze 26 beispielsweise Kanäle zur Durchführung eines temperierten, flüssigen Mediums aufweisen. Selbstverständlich können auch beide der in der Fig. 1 dargestellten Prägewalzen 26 temperierbar ausgeführt sein. Auch ist zum Beispiel ein elektrisches Heizen wenigstens einer der dargestellten Prägewalzen 26 möglich. Auf diese Weise kann der verstreckte Strang 15 bzw. die verstreckten Stränge 15 mittels wenigsten einer Prägewalze 26 temperiert sein.

Alternativ und/oder zusätzlich kann ein verstreckter bzw. gereckter Strang 15 auch mittels einer der wenigstens einen Prägewalze 26 vorgelagerten Temperiervorrichtung 29 temperiert werden. Als vorgelagerte Temperiervorrichtung 29 kann im Prinzip jedwede zum Erwärmen oder Abkühlen eines verstreckten Stranges 15 geeignete Vorrichtung zum Einsatz kommen. Beispielsweise ist die Verwendung eines weiteren Wasserbades denkbar. Ein solches Wasserbad kann hierbei entweder zum Abkühlen eines verstreckten Stranges 15 vorgesehen sein, oder kann ein solches Wasserbad beheizbar sein, um einen verstreckten Strang 15 zu erwärmen. Alternativ oder zusätzlich ist auch ein Erwärmen eines verstreckten Stranges 15 mittels Infrarotstrahlung denkbar. In der Fig. 1 ist als Beispiel für eine vorgelagerte Temperiervorrichtung 29 eine Berieslungsvorrichtung 30 dargestellt, mittels welcher ein verstreckter Strang 15 mit einer Flüssigkeit mit voreingestellter bzw. festlegbarer Temperatur berieselt werden kann.

Durch Temperierung des verstreckten Stranges 15 oder der verstreckten Stränge 15 kann der Vorgang zu Versehen der zumindest einen Oberfläche 22 mit der Mikrostruktur 24 maßgeblich beeinflusst werden, da die Temperatur beim Mikroprägen die plastische Verformbarkeit eines verstreckten Stranges 15 beeinflusst. Außerdem kann durch geeignete Temperierung für die Oberflächenbehandlung auch das Risiko einer Beschädigung eines Kunststoffumreifungsbandes 2 während der Herstellung oder während der Benutzung weiter hintangehalten werden. Eine jeweilige, für die Oberflächenbehandlung zum Versehen zumindest einer Oberfläche 22 mit der Mikrostruktur 24, geeignete Temperatur eines verstreckten Stranges 15, ist auch von dem jeweils bereitgestellten Kunststoffmaterial 3 abhängig.

Grundsätzlich kann vorgesehen sein, dass die zumindest eine Oberfläche 22 des verstreckten Stranges 15 bei einer Temperatur des verstreckten Stranges 15 zwischen 60 °C und 120 °C mit der Mikrostruktur 24 versehen wird. Dieser Temperaturbereich für einen verstreckten Strang 15 hat sich als besonders zweckmäßig erwiesen, um zumindest eine Oberfläche 22 mit der Mikrostruktur 24 zu versehen.

Am Ende des Verfahrens können zur Herstellung von Kunststoffumreifungsbändern 2 noch weitere Prozessschritte zur Konfektionierung des verstreckten Stranges 15 oder der verstreckten Stränge 15 vorgesehen sein. Beispielsweise kann eine Teilungsvorrichtung 31 angeordnet sein, um einen verstreckten und oberflächenbehandelten Strang 15 in mehrere Teilstränge zu zerteilen. Dies ist insbesondere zweckmäßig um Kunststoffumreifungsbänder 2 aus einem folienförmigen Strang 15 mit verhältnismäßig großer Breitenerstreckung quer zur Transportrichtung 8 zu erhalten. Hierbei kann vorgesehen sein, dass ein solcher verstreckter Strang 15 auf seine Breite gesehen zerteilt wird. Die Teilungsvorrichtung 31 kann zum Beispiel Schneidmesser oder Schneidwalzen aufweisen.

Zur Konfektionierung kann des Weiteren auch eine Stückelungsvorrichtung 32 vorgesehen sein. Eine solche Stückelungsvorrichtung 32 kann dazu ausgebildet sein, um einen Strang 15 oder mehrere, gegebenenfalls durch Zerteilen mit der Teilungsvorrichtung 31 erhaltene Stränge 15, in zur Lagerung oder zum Transport geeignete Stücke 33 zu schneiden. Zur Lagerung oder zum Transport können diese Stücke 33 beispielsweise auf Spulen 34 aufgewickelt werden, wie dies in der Fig. 1 veranschaulicht ist. Solche Spulen 34 können im Besonderen für eine Großmengenportionierung verwendet werden, wobei Kunststoffumreifungsbänder 2 für den endgültigen Gebrauch oder Verkauf in jeweils geeigneten Längen von einer derartigen Spule 34 abgeschnitten werden können. Alternativ ist natürlich auch eine direkte Stückelung zu gebrauchsfertigen Längen von Kunststoffumreifungsbändern 2 möglich.

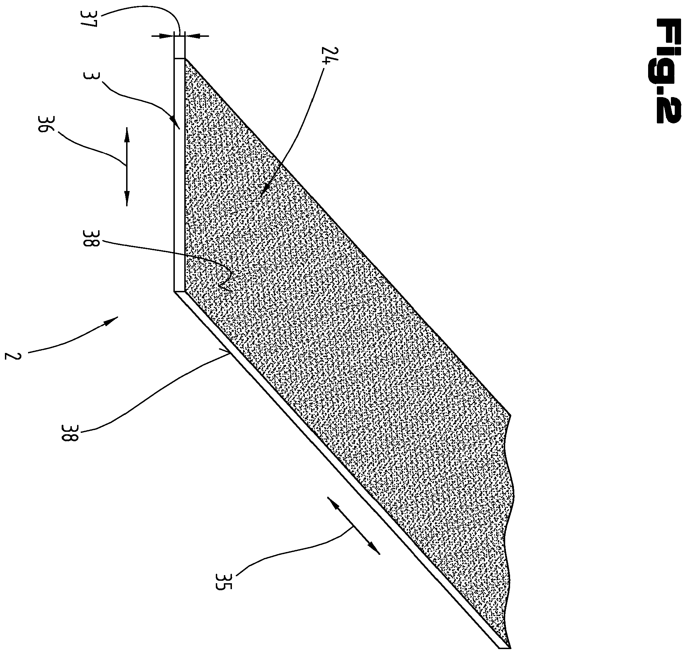

In der Fig. 2 ist ausschnittsweise ein gebrauchsfertiges Kunststoffumreifungsband 2 perspektivisch dargestellt. Das Kunststoffumreifungsband 2 kann im Besonderen mittels des beschriebenen Verfahrens hergestellt werden.

Das dargestellte Kunststoffumreifungsband 2 weist eine Längserstreckung 35 und normal dazu, eine Breitenerstreckung 36 und eine Banddicke 37 auf. Die Längserstreckung 35 und Breitenerstreckung 36 bilden zwei durch die Banddicke 37 voneinander distanzierte Bandoberflächen 38 aus. Das Kunststoffumreifungsband 2 umfasst ein teilkristallines, thermoplastisches Kunststoffmaterial 3, welches Kunststoffmaterial 3 in Richtung der Längserstreckung 35 monoaxial oder überwiegend monoaxial verstreckt ist. Bei dem Kunststoffmaterial 3 kann es sich im Speziellen um einen Polyester handeln, insbesondere kann das Kunststoffmaterial durch Polyethylenterephtalat gebildet sein.

Wesentlich ist, dass eine der Bandoberflächen 38 des Kunststoffumreifungsbandes 2 mit einer Mikrostruktur 24, insbesondere mit einer mit dem menschlichen Auge optisch nicht auflösbaren Mikrostruktur 24 versehen ist, wie dies in der Fig. 2 veranschaulicht ist. Ein derartiges Kunststoffumreifungsband 2 ist aufgrund der Mikrostruktur 24 hervorragend für teil- oder vollautomatisierte, maschinelle Umreifungsvorgänge geeignet. Im Falle eines Kunststoffumreifungsbandes 2, bei welchen lediglich eine Bandoberfläche 38 mit einer Mikrostruktur 24 versehen ist, kann bei einem Verschweißen der beiden Längsenden jeweils die Bandoberfläche 38 mit der Mikrostruktur 24 mit der gegenüberliegenden, unstrukturierten bzw. glatten Bandoberfläche 38 verschweißt werden.

In der Fig. 2 wurde wiederum zur Veranschaulichung der Mikrostruktur 24 die zumindest eine Bandoberfläche 22 des Kunststoffumreifungsbandes 2 mit einer grafischen Füllung dargestellt. Die gewählte Füllung ist hierbei zur bloßen Veranschaulichung dargestellt, und ist diese Füllung nicht etwa als Abbildung einer tatsächlichen Mikrostruktur 24 zu interpretieren. Ausführungen für tatsächliche Mikrostrukturen 24 sind dem Beschreibungstext zu entnehmen.

Vorzugsweise sind beide Bandoberflächen 38 des Kunststoffumreifungsbandes 2 mit jeweils der bzw. jeweils mit einer Mikrostruktur 24 versehen. Dadurch kann insbesondere die Effizienz einer Verschweißung, insbesondere im Falle einer Reibverschweißung, im Zuge eines Umreifungsvorgangs hinsichtlich des erforderlichen Zeit- und Energieaufwands nochmalig weiter verbessert werden, da in diesem Falle zwei jeweils eine Mikrostruktur 24 aufweisende Bandoberflächen 38 eines Kunststoffumreifungsbandes 2 miteinander verschweißt werden.

Im Prinzip ist es außerdem möglich, dass lediglich Teilabschnitte der zumindest einen Oberfläche 38 des Kunststoffumreifungsbandes 2 mit der Mikrostruktur 24 bzw. mit jeweils einer Mikrostruktur 24 versehen sind. Vorzugsweise ist die zumindest eine Bandoberfläche 38 durchgängig mit der Mikrostruktur 24 versehen, wie dies auch in der Fig. 2 veranschaulicht ist. Dies bringt unter anderem den Vorteil, dass unabhängig von einer jeweils für eine bestimmte Umreifung zum Umschlingen erforderlichen Länge des Kunststoffumreifungsbandes 2, jeweils zumindest eine Bandoberfläche 38 im Bereich der zu verschweißenden Längsenden eine Mikrostruktur 24 aufweist.

Ein Verstreckungsverhältnis des Kunststoffmaterials 3 des Kunststoffumreifungsbandes 2 kann zwischen 2 und 20 betragen. Dies bezogen auf das Kunststoffmaterial 3 vor dem Verstreckungsvorgang. Vorzugsweise beträgt das Verstreckungsverhältnis zwischen 3 und 15, insbesondere zwischen 4 und 12.

In weiterer Folge kann vorgesehen sein, dass das Kunststoffumreifungsband 2 eine Zugfestigkeit zwischen 200 N/mm² und 600 N/mm² aufweist. Durch die angegebenen Bereiche für die Zugfestigkeit kann ein Kunststoffumreifungsband mit jeweils ausreichender Zugfestigkeit für einen jeweiligen Anwendungszweck bzw. eine jeweilige Umreifung bereitgestellt werden. Bevorzugt kann das Kunststoffumreifungsband eine Zugfestigkeit zwischen 250 N/mm² und 550 N/mm², insbesondere zwischen 300 N/mm² und 500 N/mm² aufweisen.

Eine Banddicke 37 des Kunststoffumreifungsbandes 2 kann beispielsweise zwischen 0,2 mm und 1,6 mm betragen. Vorzugsweise beträgt eine Banddicke 37 zwischen 0,25 mm und 1,4 mm, insbesondere zwischen 0,3 mm und 1,3 mm. Es versteht sich für den Fachmann von selbst, dass die Banddicke 37 des Kunststoffumreifungsbandes 2 im Besonderen aufgrund der Mikrostruktur 24, abschnittsweise bzw. bereichsweise entlang des Kunststoffumreifungsbandes 2 zumindest geringfügig, beispielsweise im ein- bis zweistelligen Mikrometerbereich variieren kann.

Die Mikrostruktur 24 kann einzelne Strukturelemente wie Erhebungen und Vertiefungen umfassen, deren Ausdehnung bzw. Dimension im ein- bis zweistelligen Mikrometerbereich liegen. Im Besonderen kann eine Mikrostruktur 24 auf der zumindest einen Bandoberfläche 38 des Kunststoffumreifungsbandes 2 mit dem bloßen menschlichen Auge, beispielsweise aus einer Entfernung von 1 Meter optisch nicht klar auflösbar sein. Das heißt, dass die Mikrostruktur 24 für das menschliche Auge aus 1 Meter Betrachtungsdistanz als Struktur nicht erkennbar sein kann. Dies bedeutet nicht, dass die zumindest eine mikrostrukturierte Bandoberfläche 38 eines erfindungsgemäßen Kunststoffumreifungsbandes 2 von einer Oberfläche eines glatten Umreifungsbandes ohne Mikrostruktur 24 nicht zu unterscheiden wäre. Durch die Mikrostruktur 24 kann die zumindest eine Bandoberfläche 38 insbesondere matter, also mattiert im Vergleich zu einer glatten Oberfläche desselben Kunststoffmaterials ohne Mikrostruktur 24, erscheinen.

Die Mikrostruktur 24 kann im Besonderen durch eine Mikroprägestruktur gebildet sein, das heißt, dass die zumindest eine Bandoberfläche 38 mittels einer Prägevorrichtung 25 umfassend wenigstens eine Prägewalze 26 mit der Mikrostruktur 24 versehen wurde.

Die Mikrostruktur 24 kann grundsätzlich durch eine strukturell wohldefinierte bzw. geordnete Struktur im Mikrometerbereich gebildet sein. Das heißt, dass die Mikrostruktur 24 wiederkehrende, strukturelle Elemente aufweisen kann. Im Besonderen kann aber auch vorgesehen sein, dass die Mikrostruktur 24 durch eine Zufallsstruktur gebildet ist. Eine derartige, durch ein Zufallsmuster gebildete Mikrostruktur 24, kann mit verhältnismäßig geringem Aufwand in die zumindest eine Bandoberfläche 38 des Kunststoffumreifungsbandes 2 eingebracht bzw. auf die zumindest eine Bandoberfläche 38 aufgebracht werden.

Bei dem in der Fig. 2 dargestellten Kunststoffumreifungsband 2 kann vorgesehen sein, dass die zumindest eine Bandoberfläche 38 im Bereich der Mikrostruktur 24 bzw. durch die Mikrostruktur 24 eine mittlere Rauheit Ra zwischen 0,1 µm und 2,6 µm aufweist. Insbesondere kann die zumindest eine Bandoberfläche 38 im Bereich der Mikrostruktur 24 bzw. durch die Mikrostruktur 24 eine mittlere Rauheit Ra zwischen 0,15 µm und 1,6 µm aufweisen.

Des Weiteren kann es vorteilhaft sein, wenn die zumindest eine Bandoberfläche 38 des Kunststoffumreifungsbandes 2 im Bereich der Mikrostruktur 24 bzw. durch die Mikrostruktur 24 eine gemittelte Rautiefe R_{z} zwischen 1 µm und 15 µm aufweist. Insbesondere kann die zumindest eine Bandoberfläche 38 im Bereich der Mikrostruktur 24 bzw. durch die Mikrostruktur 24 eine gemittelte Rautiefe R_{z} zwischen 1,5 µm und 12 µm aufweisen.

Schließlich kann es zweckmäßig sein, wenn die zumindest eine Bandoberfläche 38 des Kunststoffumreifungsbandes 2 im Bereich der Mikrostruktur 24 bzw. durch die Mikrostruktur 24 eine mittlere Rillenbreite RSₘ zwischen 50 µm und 400 µm aufweist. Insbesondere kann die zumindest eine Bandoberfläche 38 im Bereich der Mikrostruktur 24 bzw. durch die Mikrostruktur 24 eine mittlere Rillenbreite RSₘ zwischen 100 µm und 300 µm aufweisen.

Durch die angegebenen Bereiche für Profilkenngrößen kann ein Kunststoffumreifungsband 2 bereitgestellt werden, bei welchem ausgezeichnete mechanische Eigenschaften, insbesondere hohe Zugfestigkeiten gleichzeitig mit guten Verarbeitungseigenschaften, insbesondere hinsichtlich maschineller Führung und Verschweissung realisiert sind.

Die angegebenen Profilkenngrößen für Profile, sowie Methoden zur Ermittlung dieser Profilkenngrößen sind in der EN ISO 4287 definiert. Neuere Definitionen und flächenhafte bzw. flächenerfassende Messmethoden für profilierte Oberflächen sind in der Normenreihe EN ISO 25178 definiert, wobei die Messwerte wiederum in Profilkenngrößen bzw. 2D-Kenngrößen nach EN ISO 4287 transferiert bzw. gerechnet werden können. Bei verstreckten Kunststoffumreifungsbändern 2 sollen die Profilkenngrößen anhand von entlang der Hauptverstreckungsrichtung 18 bzw. der Längserstreckung 35 ausgerichteter Messtrecken ermittelt werden, um etwaige Messfehler durch Überlagerung von Längsstrukturen, welche aufgrund des Verstreckungsvorgangs resultieren können, ausschließen zu können.

Die angegebenen Bereiche für Werte der Rauigkeit und Rillenbreite sind gemäß EN ISO 4287 jeweils aus einer Mehrzahl an Messstrecken ermittelte Durchschnittswerte. Eine Mikrostruktur 24 kann hierbei einzelne Strukturelemente, wie etwa Vertiefungen und Erhebungen aufweisen, deren Dimensionen stark jeweils voneinander abweichen. So kann eine Mikrostruktur 24 zum Beispiel einzelne Strukturelemente aufweisen, deren Einzeldimensionen jeweils im ein- oder zweistelligen Mikrometerbereich, oder in Grenzfällen auch im niedrigen dreistelligen Mikrometerbereich liegen. Die Dimensionen einzelner Strukturelemente der Mikrostruktur 24 können also durchaus über eine Zehnerpotenz oder sogar geringfügig darüber hinaus variieren. Dies im Besonderen, wenn die Mikrostruktur durch eine Zufallsstruktur gebildet ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Vorrichtung | 30 | Berieselungsvorrichtung |
| 2 | Kunststoffumreifungsband | 31 | Teilungsvorrichtung |
| 3 | Kunststoffmaterial | 32 | Stückelungsvorrichtung |
| 4 | Dosiervorrichtung | 33 | Stück |
| 5 | Extrusionvorrichtung | 34 | Spule |
| 6 | Extrusionswerkzeug | 35 | Längserstreckung |
| 7 | Kunststoffstrang | 36 | Breitenerstreckung |
| 8 | Transportrichtung | 37 | Banddicke |
| 9 | Abkühlvorrichtung | 38 | Bandoberfläche |
| 10 | Wasserbad | | |
| 11 | Länge | | |
| 12 | Abziehvorrichtung | | |
| 13 | Rollenelement | | |
| 14 | Reckwerk | | |
| 15 | Strang | | |
| 16 | Reckstrecke | | |
| 17 | Abziehvorrichtung | | |
| 18 | Hauptverstreckungsrichtung | | |
| 19 | Abziehvorrichtung | | |
| 20 | Aufwärmvorrichtung | | |
| 21 | Dicke | | |
| 22 | Oberfläche | | |
| 23 | Oberflächenbehandlungsvorrichtung | | |
| 24 | Mikrostruktur | | |
| 25 | Prägevorrichtung | | |
| 26 | Prägewalze | | |
| 27 | Oberflächenprofil | | |
| 28 | Prägeoberfläche | | |
| 29 | Temperiervorrichtung | | |

## Patentansprüche

1. Verfahren zur Herstellung von Kunststoffumreifungsbändern (2), umfassend Bereitstellung eines teilkristallinen, thermoplastischen Kunststoffmaterials (3), Aufschmelzen des Kunststoffmaterials (3), und Extrusion des geschmolzenen Kunststoffmaterials (3) mittels einer Extrusionsvorrichtung (5) zu wenigstens einem Kunststoffstrang (7),
Abkühlen des extrudierten Kunststoffstranges (7),
monoaxiales oder überwiegend monoaxiales Verstrecken des abgekühlten Kunststoffstranges (7) zu einem verstreckten Strang (15) mittels zumindest eines Reckwerks 14), welcher verstreckte Strang (15) zwei durch eine Dicke (21) des verstreckten Stranges (15) voneinander beabstandete Oberflächen (22) aufweist,
wobei zumindest eine Oberfläche (22) des verstreckten Stranges (15) mittels einer Oberflächenbehandlungsvorrichtung (23) mit einer Mikrostruktur (24), insbesondere mit einer mit dem bloßen menschlichen Auge optisch nicht auflösbaren Mikrostruktur (24) versehen wird,
und wobei als Oberflächenbehandlungsvorrichtung (23) eine Prägevorrichtung (25) umfassend wenigstens eine Prägewalze (26) eingesetzt wird,
**dadurch gekennzeichnet, dass**
die zumindest eine Oberfläche (22) des verstreckten Stranges (15) mittels wenigstens einer Prägewalze (26), aufweisend ein Oberflächenprofil (27) mit einer mittleren Rauheit Rₐ zwischen 2 µm und 15 µm, mit der Mikrostruktur (24) versehen wird.

2. Verfahren nach Anspruch 1, **dadurch gekennzeichnet, dass** die zumindest eine Oberfläche (22) des verstreckten Stranges (15) mittels wenigstens einer Prägewalze (26), aufweisend ein Oberflächenprofil (27) mit einer gemittelten Rautiefe R_{z} zwischen 10 µm und 100 µm, mit der Mikrostruktur (24) versehen wird.

3. Verfahren nach einem der Ansprüche 1 oder 2, **dadurch gekennzeichnet, dass** die zumindest eine Oberfläche (22) des verstreckten Stranges (15) mittels wenigstens einer Prägewalze (26), aufweisend ein Oberflächenprofil (27) mit einer mittleren Rillenbreite RSₘ zwischen 50 µm und 400 µm, mit der Mikrostruktur (24) versehen wird.

4. Verfahren nach einem der vorhergehenden Ansprüche, **dadurch gekennzeichnet, dass** die zumindest eine Oberfläche (22) des verstreckten Stranges (15) durchgängig mit der Mikrostruktur (24) versehen wird.

5. Verfahren nach einem der vorhergehenden Ansprüche, **dadurch gekennzeichnet, dass** beide Oberflächen (22) des verstreckten Stranges (15) jeweils mit einer Mikrostruktur (24) versehen werden.

6. Verfahren nach Anspruch 5, **dadurch gekennzeichnet, dass** der verstreckte Strang (15) zwischen wenigstens zwei einander gegenüberliegenden, gegensinnig rotierenden Prägewalzen (26) mit jeweils mikrostrukturierten Prägeoberflächen (28) hindurchgeführt wird, und dass mittels der beiden Prägewalzen (26) beide Oberflächen (22) des verstreckten Stranges (15) jeweils mit einer Mikrostruktur (24) versehen werden.

7. Verfahren nach einem der vorhergehenden Ansprüche, **dadurch gekennzeichnet, dass** die zumindest eine Oberfläche (22) des verstreckten Stranges (15) bei einer Temperatur des verstreckten Stranges (15) zwischen60 °C und 120 °C mit der Mikrostruktur (24) versehen wird.

8. Verfahren nach Anspruch 7, **dadurch gekennzeichnet, dass** der verstreckte Strang (15) mittels wenigstens einer Prägewalze (26) und/oder mittels einer der wenigstens einen Prägewalze (26) vorgelagerten Temperiervorrichtung (29) temperiert wird.

9. Kunststoffumreifungsband (2) mit einer Längserstreckung (35) und normal dazu, einer Breitenerstreckung (36) und einer Banddicke (37), welche Längserstreckung (35) und Breitenerstreckung (36) zwei durch die Banddicke (37) voneinander distanzierte Bandoberflächen (38) ausbilden,
wobei das Kunststoffumreifungsband (2) ein teilkristallines, thermoplastisches Kunststoffmaterial (3) umfasst, welches Kunststoffmaterial (3) in Richtung der Längserstreckung (35) monoaxial oder überwiegend monoaxial verstreckt ist,
und wobei zumindest eine der Bandoberflächen (38) des Kunststoffumreifungsbandes (2) mit einer Mikrostruktur (24), insbesondere mit einer mit dem menschlichen Auge optisch nicht auflösbaren Mikrostruktur (24) versehen ist,
und wobei die Mikrostruktur (24) durch eine Mikroprägestruktur gebildet ist,
**dadurch gekennzeichnet, dass**
die zumindest eine Bandoberfläche (38) des Kunststoffumreifungsbandes (2) im Bereich der Mikrostruktur (24) eine mittlere Rauheit Rₐ zwischen 0,1 µm und 2,6 µm aufweist.

10. Kunststoffumreifungsband nach Anspruch 9, **dadurch gekennzeichnet, dass** die Mikrostruktur (24) durch eine Zufallsstruktur gebildet ist.

11. Kunststoffumreifungsband nach einem der Ansprüche 9 oder 10, **dadurch gekennzeichnet, dass** die zumindest eine Bandoberfläche (38) des Kunststoffumreifungsbandes (2) im Bereich der Mikrostruktur (24) eine gemittelte Rautiefe R_{z} zwischen 1 µm und 15 µm aufweist.

12. Kunststoffumreifungsband nach einem der Ansprüche 9 bis 11, **dadurch gekennzeichnet, dass** die zumindest eine Bandoberfläche (38) des Kunststoffumreifungsbandes (2) im Bereich der Mikrostruktur (24) eine mittlere Rillenbreite RSₘ zwischen 50 µm und 400 µm aufweist.

13. Kunststoffumreifungsband nach einem der Ansprüche 9 bis 12, **dadurch gekennzeichnet, dass** die zumindest eine Bandoberfläche (38) des Kunststoffumreifungsbandes (2) durchgängig mit der Mikrostruktur (24) versehen ist.

14. Kunststoffumreifungsband nach einem der Ansprüche 9 bis 13, **dadurch gekennzeichnet, dass** beide Bandoberflächen (38) des Kunststoffumreifungsbandes (2) jeweils mit einer Mikrostruktur (24) versehen sind.

15. Kunststoffumreifungsband nach einem der Ansprüche 9 bis 14, **dadurch gekennzeichnet, dass** ein Verstreckungsverhältnis des Kunststoffmaterials (3) zwischen 2 und 20 beträgt.

16. Kunststoffumreifungsband nach einem der Ansprüche 9 bis 15, **dadurch gekennzeichnet, dass** es eine Zugfestigkeit zwischen 200 N/mm² und 600 N/mm² aufweist.

## Claims

1. A method for producing plastic straps (2), comprising a provision of a semi-crystalline, thermoplastic plastic material (3), melting the plastic material (3), and extrusion of the melted plastic material (3) to form at least one plastic strand (7), by means of an extrusion apparatus (5),
cooling of the extruded plastic strand (7),
monoaxial or predominantly monoaxial stretching of the cooled plastic strand (7) to form a stretched strand (15), by means of at least one stretching device (14), which stretched strand (15) has two surfaces (22), which are spaced apart from one another by a thickness (21) of the stretched strand (15),
wherein at least one surface (22) of the stretched strand (15) is provided with a microstructure (24), by means of a surface treatment apparatus (23), in particular with a microstructure (24) that cannot be optically resolved by the naked human eye,
and wherein an embossing apparatus (25) comprising at least one embossing roll (26) is used as the surface treatment apparatus (23),
**characterized in that**
the at least one surface (22) of the stretched strand (15) is provided with the microstructure (24) by means of at least one embossing roll (26), having a surface profile (27) with an average roughness Rₐ between 2 µm and 15 µm.

2. The method according to claim 1, **characterized in that** the at least one surface (22) of the stretched strand (15) is provided with the microstructure (24) by means of at least one embossing roll (26), having a surface profile (27) with an averaged roughness depth R_{z} between 10 µm and 100 µm.

3. The method according to one of claims 1 or 2, **characterized in that** the at least one surface (22) of the stretched strand (15) is provided with the microstructure (24) by means of at least one embossing roll (26), having a surface profile (27) with an average groove width RSₘ between 50 µm and 400 µm.

4. The method according to one of the preceding claims, **characterized in that** the at least one surface (22) of the stretched strand (15) is continuously provided with the microstructure (24).

5. The method according to one of the preceding claims, **characterized in that** both surfaces (22) of the stretched strand (15) are each provided with a microstructure (24).

6. The method according to claim 5, **characterized in that** the stretched strand (15) is passed through between at least two embossing rolls (26) that lie opposite one another and rotate in opposite directions, each having microstructured embossing surfaces (28), and that both surfaces (22) of the stretched strand (15) are each provided with a microstructure (24) by means of the two embossing rolls (26).

7. The method according to one of the preceding claims, **characterized in that** the at least one surface (22) of the stretched strand (15) is provided with the microstructure (24) at a temperature of the stretched strand (15) between 60°C and 120°C.

8. The method according to claim 7, **characterized in that** the stretched strand (15) is tempered by means of at least one embossing roll (26) and/or by means of a tempering apparatus (29) that precedes the at least one embossing roll (26).

9. A plastic strap (2) having a longitudinal expanse (35) and, perpendicularly thereto, a width expanse (36) and a strap thickness (37), which longitudinal expanse (35) and width expanse (36) form two strap surfaces (38) that are spaced apart from one another by the strap thickness (37),
wherein the plastic strap (2) comprises a semi-crystalline thermoplastic plastic material (3), which plastic material (3) is stretched monoaxially or predominantly monoaxially in the direction of the longitudinal expanse (35),
and wherein at least one of the strap surfaces (38) of the plastic strap (2) is provided with a microstructure (24), in particular with a microstructure (24) that cannot be resolved optically by the human eye,
and wherein the microstructure (24) is formed by an embossed microstructure,
**characterized in that**
the at least one strap surface (38) of the plastic strap (2) has an average roughness Rₐ between 0.1 µm and 2.6 µm in the region of the microstructure (24).

10. The plastic strap according to claim 9, **characterized in that** the microstructure (24) is formed by a random structure.

11. The plastic strap according to one of claims 9 or 10, **characterized in that** the at least one strap surface (38) of the plastic strap (2) has an averaged roughness depth R_{z} between 1 µm and 15 µm in the region of the microstructure (24).

12. The plastic strap according to one of claims 9 to 11, **characterized in that** the at least one strap surface (38) of the plastic strap (2) has an average groove width RSₘ between 50 µm and 400 µm in the region of the microstructure (24).

13. The plastic strap according to one of claims 9 to 12, **characterized in that** the at least one strap surface (38) of the plastic strap (2) is continuously provided with the microstructure (24).

14. The plastic strap according to one of claims 9 to 13, **characterized in that** both strap surfaces (38) of the plastic strap (2) are each provided with a microstructure (24).

15. The plastic strap according to one of claims 9 to 14, **characterized in that** a stretching ratio of the plastic material (3) amounts to between 2 and 20.

16. The plastic strap according to one of claims 9 to 15, **characterized in that** it has a tensile strength between 200 N/mm² and 600 N/mm².

## Revendications

1. Procédé de fabrication de bandes de cerclage en matière plastique (2), comprenant la mise à disposition d'une matière plastique (3) thermoplastique partiellement cristalline,
la fusion de la matière plastique (3) et l'extrusion de la matière plastique (3) fondue au moyen d'un dispositif d'extrusion (5) afin d'obtenir au moins un boudin de matière plastique (7),
le refroidissement du boudin de matière plastique (7) extrudé,
l'étirement monoaxial ou majoritairement monoaxial du boudin de matière plastique (7) refroidi afin d'obtenir un boudin étiré (15) au moyen d'au moins un dispositif d'étirement (14), ce boudin étiré (15) comprenant deux surfaces (22) distantes entre elles d'une épaisseur (21) du boudin étiré (15),
dans lequel au moins une surface (22) du boudin étiré (15) est munie, au moyen d'un dispositif de traitement de surface (23), d'une microstructure (24), plus particulièrement d'une microstructure (24) non décelable optiquement à l'œil nu,
et dans lequel, en tant que dispositif de traitement de surface (23), un dispositif d'estampage (25) comprenant au moins un rouleau d'estampage (26) est utilisé, **caractérisé en ce que**
l'au moins une surface (22) du boudin étiré (15) est muni de la microstructure (24) au moyen d'au moins un rouleau d'estampage (26) présentant un profil de surface (27) avec une rugosité moyenne Rₐ entre 2 µm et 15 µm.

2. Procédé selon la revendication 1, **caractérisé en ce que** l'au moins une surface (22) du boudin étiré (15) est muni de la microstructure (24) au moyen d'au moins un rouleau d'estampage (26) présentant un profil de surface (27) avec une profondeur de rugosité moyenne Rz entre 10 µm et 100 µm.

3. Procédé selon la revendication 1 ou 2, **caractérisé en ce que** l'au moins une surface (22) du boudin étiré (15) est munie de la microstructure (24) au moyen d'au moins un rouleau d'estampage (26) présentant un profil de surface (27) avec une largeur de rainure moyenne Rsₘ entre 50 µm et 400 µm.

4. Procédé selon l'une des revendications précédentes, **caractérisé en ce que** l'au moins une surface (22) du boudin étiré (15) est munie de la microstructure (24) de manière continue.

5. Procédé selon l'une des revendications précédentes, **caractérisé en ce que** les deux surfaces (22) du boudin étiré (15) sont munies respectivement d'une microstructure (24).

6. Procédé selon la revendication 5, **caractérisé en ce que** le boudin étiré (15) est guidé entre au moins deux rouleaux d'estampage (26) opposés entre eux et tournant en sens inverse, avec des surfaces d'estampage (28) respectivement micro-structurées et **en ce que**, au moyen des deux rouleaux d'estampage (26), les deux surfaces (22) du boudin étiré (15) sont munies respectivement d'une microstructure (24).

7. Procédé selon l'une des revendications précédentes, **caractérisé en ce que** l'au moins une surface (22) du boudin étiré (15) est munie de la microstructure (24) à une température du boudin étiré (15) entre 60 °C et 120 °C.

8. Procédé selon la revendication 7, **caractérisé en ce que** le boudin étiré (15) est régulé en température au moyen d'au moins un rouleau d'estampage (26) et/ou au moyen d'un dispositif de régulation de température(29) disposé en amont de l'au moins un rouleau d'estampage (26).

9. Bande de cerclage en matière plastique (2) avec une extension longitudinale (35) et, perpendiculaire à celle-ci, une extension en largeur (36) et une épaisseur de bande (37), l'extension longitudinale (35) et l'extension en largeur (36) formant deux surfaces de bande (38) distantes entre elles de l'épaisseur de bande (37),
dans lequel la bande de cerclage en matière plastique (2) comprend une matière plastique (3) thermoplastique partiellement cristalline, cette matière plastique (3) étant étirée de manière monoaxiale ou majoritairement monoaxiale dans la direction de l'extension longitudinale (35),
et dans lequel au moins une des surfaces de bande (38) de la bande de cerclage en matière plastique (2) est munie d'une microstructure (24), plus particulièrement avec une microstructure (24) non décelable optiquement à l'œil nu,
et dans lequel la microstructure (24) est constituée d'une microstructure estampée, **caractérisée en ce que**
l'au moins une surface de bande (38) de la bande de cerclage en matière plastique (2) présente, au niveau de la microstructure (24), une rugosité moyenne Rₐ entre 0,1 µm et 2,6 µm.

10. Bande de cerclage en matière plastique selon la revendication 9, **caractérisée en ce que** la microstructure (24) est constituée d'une structure aléatoire.

11. Bande de cerclage en matière plastique selon l'une des revendications 9 ou 10, **caractérisée en ce que** l'au moins une surface de bande (38) de la bande de cerclage en matière plastique (2) présente, au niveau de la microstructure (24), une profondeur de rugosité moyenne Rz entre 1 µm et 15 µm.

12. Bande de cerclage en matière plastique selon l'une des revendications 9 à 11, **caractérisée en ce que** l'au moins une surface de bande (38) de la bande de cerclage en matière plastique (2) présente, au niveau de la microstructure (24), une largeur de rainure moyenne RSₘ entre 50 µm et 400 µm.

13. Bande de cerclage en matière plastique selon l'une des revendications 9 à 12, **caractérisée en ce que** l'au moins une surface de bande (38) de la bande de cerclage en matière plastique (2) est munie de la microstructure (24) de manière continue.

14. Bande de cerclage en matière plastique selon l'une des revendications 9 à 13, **caractérisée en ce que** les deux surfaces de bande (38) de la bande de cerclage en matière plastique (2) sont munies respectivement d'une microstructure (24).

15. Bande de cerclage en matière plastique selon l'une des revendications 9 à 14, **caractérisée en ce qu'**un rapport d'étirement de la matière plastique (3) est entre 2 et 20.

16. Bande de cerclage en matière plastique selon l'une des revendications 9 à 15, **caractérisée en ce qu'**elle présente une résistance à la traction entre 200 N/mm² et 600 N/mm².
